(19) Europäisches Patentamt
European Patent Office
Office européen des brevets

(11) **EP 3 841 444 B1**

(12) **EUROPÄISCHE PATENTSCHRIFT**

(45) Veröffentlichungstag und Bekanntmachung des Hinweises auf die Patenterteilung:
**01.02.2023 Patentblatt 2023/05**

(21) Anmeldenummer: **19765969.1**

(22) Anmeldetag: **22.08.2019**

(51) Internationale Patentklassifikation (IPC):
**G05D 1/00** (2006.01)

(52) Gemeinsame Patentklassifikation (CPC):
**A01B 79/005; A01B 39/085; A01M 21/02; G05D 1/0094; G06V 20/17; G06V 20/188; H04W 4/02; H04W 4/38; H04W 4/40**

(86) Internationale Anmeldenummer:
**PCT/EP2019/072521**

(87) Internationale Veröffentlichungsnummer:
**WO 2020/039045 (27.02.2020 Gazette 2020/09)**

(54) **TRÄGERSYSTEM MIT EINEM TRÄGER UND EINER MOBILEN VORRICHTUNG ZUR BEARBEITUNG DES BODENS UND/ODER ZUR MANIPULATION DER FLORA UND FAUNA UND VERFAHREN HIERZU**

CARRIER SYSTEM COMPRISING A CARRIER AND A MOBILE DEVICE FOR TILLING THE SOIL AND/OR FOR MANIPULATING FLORA AND FAUNA, AND METHOD THEREFOR

SYSTÈME DE SUPPORT POURVU D'UN SUPPORT ET D'UN DISPOSITIF MOBILE POUR LE TRAITEMENT DU SOL ET/OU POUR LA MANIPULATION DE LA FLORE ET DE LA FAUNE ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2018 DE 102018120755**
**24.08.2018 DE 102018120756**

(43) Veröffentlichungstag der Anmeldung:
**30.06.2021 Patentblatt 2021/26**

(73) Patentinhaber: **Naiture GmbH & Co. Kg**
**25764 Friedrichsgabekoog (DE)**

(72) Erfinder:
• **HUSSMANN, Stephan**
**25746 Heide (DE)**
• **KNOLL, Florian Johannes**
**25813 Husum (DE)**
• **CZYMMEK, Vitali**
**25746 Heide (DE)**

(74) Vertreter: **Puschmann Borchert Kaiser Klettner Patentanwälte Partnerschaft mbB**
**Bajuwarenring 21**
**82041 Oberhaching (DE)**

(56) Entgegenhaltungen:
WO-A1-2018/033925      DE-A1-102016 212 623

• **Dji: "MG Spreading System User Guide v1.0", , 30. März 2018 (2018-03-30), XP055637295, Gefunden im Internet: URL:https://dl.djicdn.com/downloads/mg_1s/ 20180330/MG_Spreading_System_User_Guide_ v1 .0_Multi.pdf [gefunden am 2019-10-30]**
• **Dji: "AGRAS MG-1S User Manual", , 17. Oktober 2017 (2017-10-17), XP055637308, Gefunden im Internet: URL:https://dl.djicdn.com/downloads/mg_1s/ 20171017/MG-1S_MG-1S_RTK_User_Manual_v1 .0_ EN.pdf [gefunden am 2019-10-30]**
• **KNOLL FLORIAN J ET AL: "CPU architecture for a fast and energy-saving calculation of convolution neural networks", PROCEEDINGS OF SPIE; [PROCEEDINGS OF SPIE ISSN 0277-786X VOLUME 10524], SPIE, US, Bd. 10335, 26. Juni 2017 (2017-06-26), Seiten 103351M-103351M, XP060092216, DOI: 10.1117/12.2270282 ISBN: 978-1-5106-1533-5**

**Beschreibung**

Die Erfindung betrifft ein Trägersystem mit einem Träger und einer mobilen Vorrichtung zur Bearbeitung des Bodens und/oder zur Manipulation der Flora und Fauna nach Anspruch 1 und ein Verfahren zur Echtzeitregelung der Bearbeitung des Bodens und/oder der Manipulation von Flora und Fauna nach Anspruch 19.

Die Unkrautregulierung in der Landwirtschaft ist eine sehr arbeitsintensive Aufgabe, besonders im biologischen Anbau, die den Einsatz von Chemikalien verbietet oder einschränkt. Je nach angebauter Kultur ist die Unkrautregulierung in unmittelbarer Nähe der Nutzpflanze notwendig. Diese Regulierung findet im Allgemeinen im frühen Wachstumszustand statt. Sowohl Nutzpflanze auf der einen Seite als auch Unkraut bzw. Beikraut auf der anderen Seite sind da noch sehr klein und nahe beieinander. Um eine Beschädigung der Nutzpflanze zu vermeiden, ist es zielführend selektive Methoden anzuwenden. Dies erfolgt im biologischen Anbau, zum Beispiel für Möhren, durch eine arbeitsintensive, körperschädigende manuelle Arbeit mit sogenannten *"Jäte-Fliegern"*. Saison-Arbeitskräfte liegen dabei auf dem Bauch auf einer Pritsche und entfernen die Unkräuter.

Für Sonderkulturen mit größeren Pflanzenabständen, wie zum Beispiel Zuckerrüben, oder Salat, sind Traktoranbaugeräte bekannt, welche in der Lage sind, einzelne Nutzpflanzen zu erkennen und entsprechende Werkzeuge so anzusteuern, dass die Fläche der Nutzpflanze unbearbeitet bleibt. Für diese Aufgabe ist keine Selektivität notwendig. D.h., dass diese Systeme nicht die zu überarbeitenden Flächen überprüfen, sondern vielmehr das Werkzeug *"auf Blind"* anhand der bekannten Nutzpflanzenposition steuern. Allgemein definiert der Abstand zur Nutzpflanze die Genauigkeitsanforderungen.

Aus der DE 40 39 797 A1 ist eine Vorrichtung zur Unkrautbekämpfung bekannt, wobei ein Aktor zur Vernichtung des Beikrauts permanent läuft und erst, wenn durch einen Sensor eine Kulturpflanze erkannt wird, dieser kurzzeitig unterbrochen wird. Der Träger wird dabei durch einen Wagen gebildet.

Aus der DE 10 2015 209 879 A1 ist eine Vorrichtung zur Beschädigung von Beikraut bekannt, welches ein Bearbeitungswerkzeug aufweist. Dieses Bearbeitungswerkzeug dient dazu, das Beikraut zu beschädigen. Zudem ist eine Klassifizierungseinheit vorgesehen, welche die Positionsdaten des Beikrauts entweder aufweist oder das Beikraut erkennt und die Positionsdaten ermittelt. Eine Lokalisierungseinheit ermittelt eine Relativposition zwischen dem Bearbeitungswerkzeug und dem Beikraut. Eine Manipulator-Einheit in Form eines Wagens positioniert das Bearbeitungswerkzeug in Abhängigkeit der ermittelten Relativpositionen entsprechend.

Ein entsprechendes Gerät mit einer Druckfördereinheit und einer Flüssigkeitsabgabeeinheit ist aus der DE 10 2015 209 891 A1 bekannt. Bei dieser Ausführungsform wird das Beikraut durch Aufsprühen von Flüssigkeit unter Druck vernichtet. Der Träger ist dabei ein Wagen.

Aus der DE 10 2015 209 888 A1 ist es bekannt, die Flüssigkeit impulsmäßig auf das Beikraut aufzubringen und somit dieses zu beschädigen. Auch hier wird der Träger durch einen Wagen gebildet.

In der DE 10 2013 222 776 A1 wird ein in einem Wagen gelagerter Stempel offenbart, der in einer Führungseinrichtung zur Führung des Stempels angeordnet ist. Hierbei wird der Stempel auf das Beikraut aufgesetzt und mit Druck beaufschlagt. Über den Druck beaufschlagt wird das Beikraut vernichtet.

Mit Agrarrobotern und Erntemaschinen, die automatisiert und mit Telematik Einrichtung versehen die Landwirtschaft technisch unterstützen, werden derzeit neue Wege beschritten. Vielfach können technische Prinzipien und Erkenntnisse aus der Raumfahrt, der Fernerkundung und der Robotik für die Fragestellungen in der Landwirtschaft übernommen werden, jedoch sind diese an die Aufgabenstellungen in der Landwirtschaft gezielt anzupassen und erfordern neue Vorrichtungen und Verfahren.

Beispielsweise sind die oben genannten bestehenden automatisierten Agrarroboter systembedingt darauf ausgerichtet, nur eine Pflanzenreihe nach der anderen abzufahren. Eingriffe erfolgen nur in die Flora und dies nur seriell. Eine Kontrolle erfolgt in der Regel anschließend durch Begehung, zum Beispiel durch den qualifizierten Menschen.

Nachteilig an den bekannten Vorrichtungen ist auch, dass es sich bei den Trägern jeweils um Spezialkonstruktionen von Wagen handelt, welche jeweils nur reihenweise die Nutzpflanzen abfahren und relativ unflexibel einsetzbar sind.

Weiterhin sind Flugdrohnen als Tragesysteme bekannt, welche als Spezialanfertigungen für den Einsatz in der Landwirtschaft ausgebildet sind. Auch hier handelt es sich um Spezialkonstruktionen, welche eine geringe Flexibilität für unterschiedliche Anforderungsprofile in der Landwirtschaft aufweisen.

Ein Problem bei der automatisierten Behandlung der Felder ist auch das Ermitteln der Daten, wo sich das Beikraut befindet und was demgegenüber als Nutzpflanze zu behandeln ist.

Aus der DE 10 2005 050 302 A1 ist ein Verfahren zum berührungslosen Ermitteln des aktuellen Ernährungszustandes eines Pflanzenbestandes und zum Verarbeiten dieser Information unter Berücksichtigung weiterer Parameter wie Fruchtart und/oder Sorte und/oder Entwicklungsstadium und/oder Ertragsziel in eine Düngeempfehlung bekannt, bei dem von einem Teil des Pflanzenbestandes mindestens ein digitales Bild mittels eines Bildaufnahmesystems in mindestens zwei spektralen Kanälen aufgenommen, aus dem Bild der aktuelle Ernährungszustand durch eine Bildanalyse ermittelt und aus letzterer die Düngeempfehlung abgeleitet wird. Dieser bekannte Stand der Technik hat den Nachteil, dass die Datenverarbeitung relativ lange dauert und für ein in situ System nicht geeignet ist.

In der DE 10 2008 009 753 B3 ist weiterhin ein Verfahren zum berührungslosen Bestimmen der Biomasse und morphologischen Parameter von Pflanzenbeständen beschrieben, bei dem auf die Pflanzen des Bestandes mit einer von auf einem mobilen Träger befestigten Ultraschallquelle emittierten Schallfeld während der Überfahrt eingewirkt, die von den Pflanzen und den Boden reflektierten Schallechos durch einen am Träger fixierten Empfänger erfasst und von diesem nach Wandlung in digitale Signale an eine Auswerte- und Signalverarbeitungseinheit weitergegeben werden, die die Signale aktuell auswertet, auf einem Datenträger speichert und auf einem Monitor anzeigt, wobei optional in einer elektronisch gesteuerten Ausbringeinheit die Signale zu Steuerbefehlen zum Ausbringen von Produktmitteln verarbeitet werden. Dieser Stand der Technik ermöglicht es zwar, morphologische Parameter wie die Anzahl der Blattetagen, die Blattstellung und die vertikale Verteilung der Biomasse direkt zu bestimmen, jedoch ist eine Bestimmung des Beikrauts damit nicht möglich.

Aus der DE 20 2016 212 623 A1 offenbart ein UAV-basiertes Abfühlen für Arbeitsabläufe in einem Arbeitsbereich. Mindestens ein UAV mit einem Attributsensor, wie einer Kamera, um Unkraut zu identifizieren, kommuniziert dabei, im Vorausflug und/oder Hinterherflug zur Kontrolle/Korrektur/Nachbesserung, mit einer Erntegutpflegemaschine am Boden, die am ermittelten Standort der Erntegutpflegemaschine eine oder mehrere Chemikalien dosiert versprüht.

Die Veröffentlichung Dji:"MG Spreading System User Guide v1.0", 30.März 2018 (2018-03-30), XP055637295, URL:http://dl.diicdn.com/downloads/mq 1s/20180330/MG Spreading System User Guide v1.0 Multi. pdf [gefunden am 2019-10-30] zeigt eine Gebrauchsanleitung für einen Techniker und die Montageschritte für den Zusammenbau und die Anbringung eines Sprühsystems (Spreading System") an einer Drohne. Weiter werden die Bauteile des Sprühsystems und deren Zusammenbau schrittweise erklärt sowie die technischen Daten gelistet.

Die Veröffentlichung Dji: "AGRAS MG-1S User Manual", 17. Oktober 2017 (2017-10-17), XP055637308, URL:https://dl.diicdn.com/downloads/mg_1s/20171017/MG-1S_MG-1S RTK User Manual v1.0_EN.pdf [gefunden am 2019-10-30] zeigt eine Gebrauchsanleitung für einen Techniker/Drohnenpiloten mit Sicherheitsinformationen und den Montageschritten für den Zusammenbau an einer Drohne mit Sprühtank. Weiter werden die einzelnen Bauteile und deren Zusammenbau schrittweise erklärt sowie die technischen Daten gelistet und der Betrieb durch die Fernbedienung erklärt.

Der Aufsatz KNOLL FLORIAN J ET AL: "CPU architecture for fast and energy-saving calculation of convolution neural networks", PROCEEDINGS OF SPIE; [PROCEEDINGS OF SPIE ISSN 0277-786X VOLUME 10524], SPIE, US, Bd. 10335, 26.Juni 2017 (2017-06-26), Seiten 103351M-103351M, XP060092216, DOI 10.1117/12.2270282, ISBN: 978-1-5106-1533-5 zeigt eine Veröffentlichung der Erfinder zu Problemen beim Einsatz von künstlichen neuronalen Netzen durch die nötige Rechenkapazität. Dabei wird auf die Entwicklung von neuen Prozessoren auf der Basis eines Field Programmable Gate Arrays (FPGA) verwiesen, der für die Anwendung von Deep Learning optimiert ist. Der Prozessor kann für eine bestimmte Anwendung (in diesem Beitrag für eine Anwendung im Bereich der ökologischen Landwirtschaft) angepasst werden. Der Stromverbrauch beträgt nur einen Bruchteil einer GPU-Anwendung und sollte daher gut für energiesparende Anwendungen geeignet sein.

Die WO 2018/033925 A1 offenbart ein "System and method for drone fleet management for harvesting and dilution". Wobei der technische Einsatz des Anmeldegegenstandes auf dem Gebiet der Ernte und des Beschneidens von Obst-, Wein - und hochwachsenden Gemüsepflanzen liegt. Der Einsatz des Erfindungsgegenstandes auf dem technischen Feld für Feldpflanzen / Freilandpflanzen und deren Aufzucht ("...not in the technical field of field grows and field plants...") wird ausdrücklich als ungeeignet angesehen und deshalb nicht verfolgt (vergleiche Absatz [0001], letzter Satz).

Der Erfindung liegt gemäß einem erstem Aspekt die Aufgabe zugrunde, ein Trägersystem mit einem Träger und einer mobilen Vorrichtung zur Bearbeitung des Bodens und/oder zur Manipulation der Flora und Fauna sowie ein Verfahren zur Echtzeitregelung der Bearbeitung des Bodens und/oder der Manipulation von Flora und Fauna durch das Trägersystem anzugeben, welches eine in Echtzeit geregelte, qualifizierte Beseitigung der detektierten Flora und/oder Fauna sowie auch eine parallele Analyse von Flora und Fauna ermöglicht. Vorzugsweise soll das Trägersystem modulartig mit unterschiedlichen mobilen Vorrichtungen verbindbar sein, welche je nach Einsatzbedürfnisse optimale Sensoren und/oder Werkzeugeinheiten aufweisen.

Diese Aufgabe wird für das Trägersystem durch die Merkmale des Anspruches 1 und für das Verfahren durch die Merkmale des Anspruches 19 gelöst.

Die Unteransprüche bilden vorteilhafte Weiterbildungen der Erfindung.

Der Erfindung liegt gemäß dem ersten Aspekt die Erkenntnis zugrunde, dass ein Trägersystem, welches gemeinsame Funktionen von Träger und mobiler Vorrichtung in dem Träger vorsieht und lediglich von der mobilen Vorrichtung benötigte Aggregate des Trägersystems in der mobilen Vorrichtung anordnet, eine deutlich höhere Flexibilität für das Trägersystem erzeugt, insbesondere dann, wenn die mobile Vorrichtung mit dem Träger lösbar verbunden und gegen andere mobile Vorrichtungen austauschbar ist.

Die Erfindung betrifft daher ein Trägersystem mit einem Träger und einer mobilen Vorrichtung mit zumindest einem Sensor und einer Werkzeugeinheit zur Bearbeitung des Bodens und/oder zur Manipulation der Flora und Fauna.

Der Träger ist mit einem Antrieb zum Bewegen des Trägersystems, mit einer Steuereinrichtung, mit einer Energiequelle, welche mit dem Antrieb zusammenwirkt und die notwendige Spannung für den Betrieb zur Verfügung stellt, mit einer Aufnahme zum Aufnehmen und Verbinden mit der mobilen Vorrichtung, mit einer Kommunikationseinheit, mit einer ersten mit der Kommunikationseinheit zusammenwirkenden Kommunikationsschnittstelle zum Datenaustausch mit der mobilen Vorrichtung, welche eine zugeordnete Schnittstelle aufweist, sowie mit einer zweiten mit der Kommunikationseinheit zusammenwirkenden Kommunikationsschnittstelle versehen. Über die zweite Kommunikationsschnittstelle werden zumindest Steuerungsdaten empfangen und mittels der Kommunikationseinheit an die Steuerungseinrichtung zum vorbestimmten Bewegen des Trägersystems weitergegeben. Der Träger und die mobile Vorrichtung weisen dabei Mittel zum bedarfsweisen Verbinden miteinander auf. Der Träger ist dafür mit einem Greifer versehen und die mobile Vorrichtung weist dem Greifer zugeordnete Aufnahmen auf, über den die Vorrichtung fixierbar und lösbar mit dem Träger verbunden ist. Hierdurch wird eine Flexibilität des Trägersystems geschaffen, das einen breiten Einsatzbereich ermöglicht, aber auch unterschiedlichen Bedürfnissen in der Landwirtschaft gerecht wird, indem bedarfsgerecht mobile Vorrichtungen mit einem einheitlichen Träger verbunden werden können. Es wird eine Austauschbarkeit des Trägers mit verschiedenen mobilen Vorrichtungen ermöglicht.

Gemäß der Erfindung ist der Träger als unbemanntes Luftfahrzeug (Flugdrohne), unbemanntes Landfahrzeug, unbemanntes Wasserfahrzeug, oder unbemanntes Unterwasserfahrzeug, beispielsweise für Aquakulturen, ausgebildet.

Je nach Einsatzbereich wird der eine oder andere Träger genommen.

Gemäß einer Ausführungsform der Erfindung ist die zweite Kommunikationsschnittstelle eine Antenne, welche zum Datenaustausch mit einem zentralen, vorzugsweise ortsfesten, von dem Träger separaten Rechner ausgebildet ist. Hierdurch wird ermöglicht, dass Geräte, beispielsweise für die Telemetrie und oder die Auswertung der ermittelten Daten, unabhängig vom Träger bearbeitet und ausgewertet werden können. Der Träger kann dadurch leicht gewichtiger ausgebildet werden.

Um aber auch einen Datenaustausch mit der mobilen Vorrichtung zu ermöglichen, ist die zweite Kommunikationsschnittstelle hierfür ausgebildet.

Der Träger benötigt beispielsweise zum Betrieb des Antriebs eine Spannungsquelle. Um eine solche Spannungsquelle nur einmal vorzusehen und somit Gewicht im Trägersystem einzusparen, weisen der Träger und die mobile Vorrichtung jeweils einen Spannungsanschluss auf, über den auch die mobile Vorrichtung mit Spannung versorgbar ist. Es ist somit nur eine Energiequelle für den Träger und die mobile Vorrichtung vorgesehen.

Alternativ oder ergänzend zum Greifer und den Aufnahmen können der Träger und die mobile Vorrichtung einander zugeordnete Kupplungsmittel aufweisen, über welche die mobile Vorrichtung lösbar mit dem Träger verbindbar ist.

Gemäß einer Ausführungsform der Erfindung weist der Träger eine GPS-Einheit zur fortlaufenden Erfassung der Positionskoordinaten des Trägers auf. Auf diese Weise können die Positionskoordinaten den über den Sensor ermittelten Daten zugeordnet werden. Eine Auswertung wird hierdurch vereinfacht.

Vorzugsweise ist die mobile Vorrichtung mit dem zumindest einen Sensor und der Werkzeugeinheit mit zumindest einem motorisch angetriebenen Werkzeug, einem Aktor zum Verfahren zumindest des Werkzeugs der Werkzeugeinheit, einem Motor zum Antreiben der Werkzeugeinheit und/oder des Aktors, einer Datenbank, einer ersten Kommunikationseinheit mit Schnittstelle und einem ersten Rechner versehen. Der Rechner dient zum Steuern des Motors, des Sensors, der Werkzeugeinheit und/oder des Aktors aufgrund generierter Steuerbefehle. Die über den Sensor erfassten Daten werden dabei mit den in der Datenbank hinterlegten Daten fortlaufend abgeglichen, um entsprechende Steuersignale für den Motor, den Sensor, die Werkzeugeinheit und/oder den Aktor zu generieren. Durch diese Vorrichtung wird eine Mobilität und Flexibilität geschaffen, gemäß der die mobile Vorrichtung eine eigene Einheit bildet, mit der sämtliche Daten in Echtzeit abgearbeitet, Steuersignale für die Werkzeugeinheit generiert und umgehend die Werkzeugeinheit gemäß den Steuersignalen arbeiten kann. Hierdurch ergeben sich Möglichkeiten der Kombination beispielsweise mit verschiedenen Trägern, welche die Vorrichtung bedarfsweise über das Feld bewegen.

Vorzugsweise erfolgt der Datenabgleich der durch den Sensor ermittelten Daten mit der Datenbank in Echtzeit, insbesondere mit einer Verifikation und Klassifikation der durch den Sensor ermittelten Daten.

Dies erhöht die Reaktionsfähigkeit der Vorrichtung. Unter Echtzeit wird die Möglichkeit verstanden, Analyse- und Bearbeitungsvorgänge in einem Arbeitsgang in situ durchführen zu können.

Gemäß einer Ausführungsform der Erfindung ist der Sensor eine visuelle Detektionseinheit mit einer Kamera. Die zu verarbeitenden Daten sind somit Bilddaten, welche ohne weiteres mit einer Datenbank abgeglichen werden können.

Um einzelne Komponenten einfach austauschen zu können und somit die Rüstzeiten zu verringern, ist die Vorrichtung zweigeteilt ausgebildet. Hierbei ist in einer ersten Einheit der Sensor, die Werkzeugeinheit, der Motor zum Antreiben der Werkzeugeinheit und/oder des Aktors, der Aktor, der erste Rechner und die erste Kommunikationseinheit mit Schnittstelle vorgesehen. In der zweiten Einheit sind die Datenbank, ein zweiter Rechner und eine zweite Kommunikationseinheit mit Schnittstelle vorgesehen. Die erste Einheit und die zweite Einheit sind über die Schnittstelle zum Datenaustausch miteinander verbindbar. Zudem ist es durch die Zweiteilung auch möglich, dass die beiden Einheiten räumlich getrennt voneinander angeordnet werden können. Dies ist beispielsweise dann von Vorteil, wenn das Gewicht der bewegten Teile der Vorrichtung möglichst gering sein soll. In diesem Fall könnte die zweite Einheit zentral fix angeordnet werden und die erste Einheit auf dem Feld bewegt werden.

Hierbei ist es günstig, wenn die erste Einheit ein erstes Gehäuse und die zweite Einheit ein zweites Gehäuse umfasst, welches die in den Einheiten vorgesehenen Aggregate vor äußeren Einflüssen schützt.

Das erste und das zweite Gehäuse können über eine Steckverbindung lösbar miteinander verbunden sein. Hierdurch ist ein modulartiges Zusammenfügen der beiden Einheiten, aber auch ein Austausch bei Ausfall einer Einheit, ohne weiteres möglich.

Die Werkzeugeinheit weist vorzugsweise mindestens eine Vorschubeinheit und eine Rotationseinheit auf, welche mit dem Motor zusammenwirkt. Der Einsatzbereich des Werkzeugs wird hierdurch auf einfache Weise erweitert, ohne dass die Vorrichtung bewegt werden muss.

Vorzugsweise ist die Rotationseinheit an einem distalen Ende mit zumindest dem einen Werkzeug versehen, insbesondere mit einer Fräse oder mit einer Messereinheit. Mit Rotation beispielsweise der Messereinheit können zum Beispiel kleine Kerbtiere oder Beikraut selektiv zerstört werden.

Um das Gewicht der Vorrichtung weiter zu reduzieren, ist ein Spannungsanschluss für eine externe Spannungsversorgung vorgesehen. Dabei kann der Spannungsanschluss an der ersten Einheit vorgesehen sein. Im zusammengebauten Zustand von erster Einheit und zweiter Einheit kann die zweite Einheit über diesen Spannungsanschluss die erste Einheit als auch die zweite Einheit mit Spannung versorgen. Vorzugsweise wird dabei die Spannungsquelle eines Trägers zur Spannungsversorgung genutzt.

Bevorzugt ist die dem Träger zugeordnete Schnittstelle der mobilen Vorrichtung für den Datenaustausch, beispielsweise mit einem externen Rechner, in der zweiten Einheit angeordnet.

Gemäß einer Ausführungsform der Erfindung sind mehrere unterschiedliche mobile Vorrichtungen vorgesehen, wobei jeweils nur eine mobile Vorrichtung in der Aufnahme angeordnet ist. Vorzugsweise weisen die mobilen Vorrichtungen unterschiedliche Sensoren und/oder Werkzeugeinheiten auf. Bedarfsweise wird die eine oder andere mobile Vorrichtung mit dem Träger verbunden, insbesondere in Abhängigkeit der durch den Sensor ermittelten Daten und der sich daraus ergebenden Auswertung. Hierdurch kann das Trägersystem bedarfsgerecht an die Anforderungen in der Landwirtschaft und der sich aktuell ergebenen Situation angepasst werden.

Die oben erwähnte Aufgabe wird auch durch ein Verfahren zur Echtzeitregelung der Bearbeitung des Bodens und/oder der Manipulation von Flora und Fauna, insbesondere durch das Trägersystem der eben genannten Art, gelöst, wobei das Verfahren folgende Schritte aufweist:

- Ermitteln der notwendigen Maßnahmen;
- Durchführen der ermittelten Maßnahmen.

Zwischen dem Ermitteln der notwendigen Maßnahmen und dem Durchführen der ermittelten Maßnahmen können noch folgende Schritte durchgeführt werden:

- Aussuchen einer mobilen Vorrichtung aus den zur Verfügung stehenden Vorrichtungen;
- Verbinden der Vorrichtung mit einem Träger.

Vorzugsweise wird die mobile Vorrichtung nach Durchführen der Maßnahme gegen eine andere mobile Vorrichtung ausgetauscht und eine weitere Maßnahme durchgeführt. Die Flexibilität des Trägersystems und die Möglichkeiten erhöhen sich dadurch erheblich.

Das Ermitteln der notwendigen Maßnahmen kann durch die mobile Vorrichtung wie folgt durchgeführt werden:

- zeitlich kontinuierliche Aufnahme datentechnisch definierter Voxel und/oder Pixel durch einen Sensor der mobilen Vorrichtung;
- Übermittlung der Aufnahmedaten an eine Datenbank;
- Speicherung der Aufnahmedaten in der Datenbank;
- qualitativer Datenabgleich der Aufnahmedaten mit den in der Datenbank hinterlegten Daten, vorzugsweise mit Durchführung einer Segmentierung, einer Datenreduktion und/oder einer Verifikation der Aufnahmedaten durch einen Rechner;
- Bewertung der abgeglichenen Aufnahmedaten mit bestehenden definierten Datensätzen in der Datenbank durch einen Klassifikator in Verbindung mit dem Rechner;
- Verarbeitung und Umsetzung der Bewertung durch den Rechner in regelungs- und/oder steuerungstechnische Daten für einen Motor, einen Aktor, eine Werkzeugeinheit und/oder einen Träger.

Insbesondere erfolgt das Durchführen der ermittelten Maßnahmen auf Basis der Umsetzung der Bewertung durch den Rechner in regelungs- und/oder steuerungstechnische Daten für den Motor, den Aktor, die Werkzeugeinheit und/oder ggfs. dem Träger sowie durch Anfahren des Motors, des Aktors, der Werkzeugeinheit und/oder des Trägers zur Bearbeitung des Bodens und/oder zur Manipulation von Flora und Fauna.

Die Bewertung wird vorzugsweise in einem mit dem Klassifikator zusammenwirkenden Rechner, insbesondere in dem zweiten Rechner, und die Verarbeitung und Umsetzung der Bewertung in regelungstechnische Daten in einem anderen Rechner, insbesondere in dem ersten Rechner, durchgeführt. Hierfür wird die Bewertung von dem einen Rechner an den anderen Rechner übermittelt. Die Rechenleistung kann dadurch erhöht werden, indem die Rechner parallel die Daten verarbeiten können.

Die Speicherung, der qualitative Datenabgleich der Aufnahmedaten mit in der Datenbank hinterlegten Daten und/oder die Bewertung durch den Klassifikator werden vorzugsweise durch Künstliche Intelligenz unterstützt. Die Effektivität des Trägersystems und des Verfahrens wird hierdurch erheblich verbessert.

Um die Analyse der Aufnahmedaten zu beschleunigen, werden beim Datenabgleich die Aufnahmedaten an die Segmentierungs- und Datenreduzierungseinrichtung übermittelt, welche Zwischenbilder erzeugt. Die Zwischenbilder weisen deutlich reduzierte Daten auf.

Insbesondere nach dem Erzeugen der Zwischenbilder werden diese an den Klassifikator übermittelt, welcher die erzeugten Zwischenbilder anhand bestehender definierter Bilder und Datensätze in der Datenbank im Zusammenwirken mit dem Rechner bewertet.

Gemäß einer Ausführungsform der Erfindung werden in der Segmentierungs- und Datenreduzierungseinrichtung zur Erzeugung der Zwischenbilder nacheinander folgende Schritte durchgeführt:

- Jedes übermittelte Bild aus mehreren Pixeln wird in das RGB-(Red, Green, Blue)-Farbmodell überführt;
- jedes Pixel des übermittelten Bildes basierend auf dem RGB-Farbmodell wird in ein HSV (hue, saturation, value)-Farbmodell transferiert;
- jeder Pixel basierend auf dem HSV-Farbmodell wird im Hinblick auf die Farbsättigung (saturation) anhand eines Schwellenwertes bewertet, wobei, wenn der Wert der Farbsättigung einen Schwellenwert übersteigt, das Pixel dem binären Wert "1" zugeordnet wird, und, wenn der Wert der Farbsättigung einen Schwellenwert unterschreitet, das Pixel dem binären Wert "O" zugeordnet wird;
- vorzugsweise parallel mit dem eben genannten Schritt wird jedes Pixel basierend auf dem HSV-Farbmodell im Hinblick auf den Farbwinkel (hue) anhand eines vorbestimmten Bereiches bewertet, wobei, wenn der Farbwinkel in dem vorbestimmten Bereich liegt, das Pixel dem binären Wert "1" zugeordnet wird, und, wenn der Farbwinkel außerhalb des Bereichs liegt, das Pixel dem binären Wert "O" zugeordnet wird;
- aus den binären Informationen des Farbwinkels und der Farbsättigung entsteht das erste Zwischenbild, welches erheblich weniger Daten als das von der Kamera erzeugte Bild enthält.

Vorzugsweise werden in der Segmentierungs- und Datenreduzierungseinrichtung Pixelfelder aus den Pixeln des Zwischenbildes erzeugt, um die Analyse weiter zu beschleunigen und zu optimieren.

Um später die durch die Bewertung ermittelten Ergebnisse aus den Bildern in regelungs- und/oder steuerungstechnische Daten für den Akteur und/oder den Träger umsetzen zu können, versieht die Segmentierungs- und Datenreduktionseinrichtung die Pixel mit Lagekoordinaten.

Gemäß einer Ausführungsform der Erfindung nimmt der Klassifikator mit Hilfe eines künstlichen neuronalen Netzes die Klassifikation vor. Vorzugsweise ist dabei das künstliche neuronale Netz durch ein Convolutional Neural Network (CNN) gebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1      eine schematische Darstellung eines Tragsystems mit räumlich getrennten Gehäusen einer mobilen Vorrichtung gemäß einer ersten Ausführungsform der Erfindung;

Fig. 2      eine schematische Darstellung eines Tragsystems mit räumlich getrennten Gehäusen einer mobilen Vorrichtung, die über eine Steckverbindung miteinander verbunden sind, gemäß einer zweiten Ausführungsform der Erfindung;

Fig. 3      eine Seitenansicht auf das Tragsystem gemäß der ersten Ausführungsform der Erfindung mit Anbindung der mobilen Vorrichtung an eine Flugdrohne;

Fig. 4      ein Flussdiagramm, welches die Schritte eines Verfahrens mit dem Tragsystem veranschaulicht;

Fig. 5     ein Flussdiagramm, welches die Schritte des Verfahrens zur Ermittlung der notwendigen Maßnahmen darstellt;

Fig. 6     ein durch die visuelle Detektionseinheit aufgenommenes Bild;

Fig. 7     ein schematischer Aufbau eines Convolution Neuronalen Netzwerkes ausgehend von dem Bild von Fig. 6;

Fig. 8     ein Flussdiagramm, welches ein Verfahren der Segmentierungs- und Datenreduktionseinheit zeigt;

Fig. 9     ein aus der Segmentierungs- und Datenreduktionseinheit erstelltes Zwischenbild;

Fig. 10    einen Teilausschnitt des Zwischenbildes mit drei unterschiedlichen Fällen für den Klassifikator;

Fig. 11    zwei prinzipielle Darstellungen von weiteren Pixelfeldern für die Bewertung durch den Klassifikator;

Fig. 12    zwei prinzipielle Darstellungen von weiteren Pixelfeldern für die Bewertung durch den Klassifikator;

Fig. 13    ein durch den Klassifikator erstelltes und bewertetes Bild, und

Fig. 14    die prinzipielle Darstellungen der Arbeitsweise des Klassifikators.

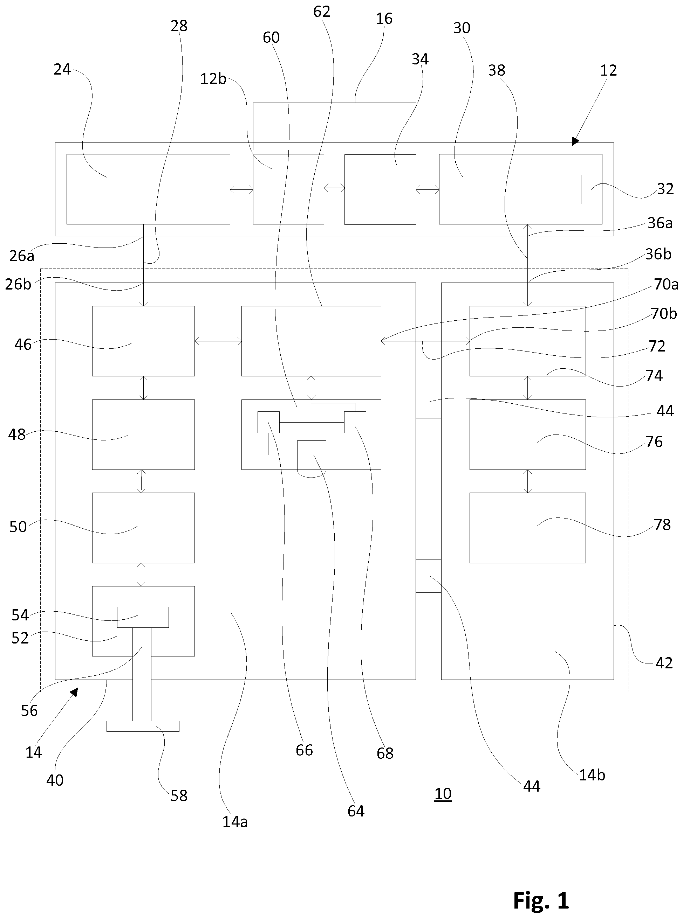

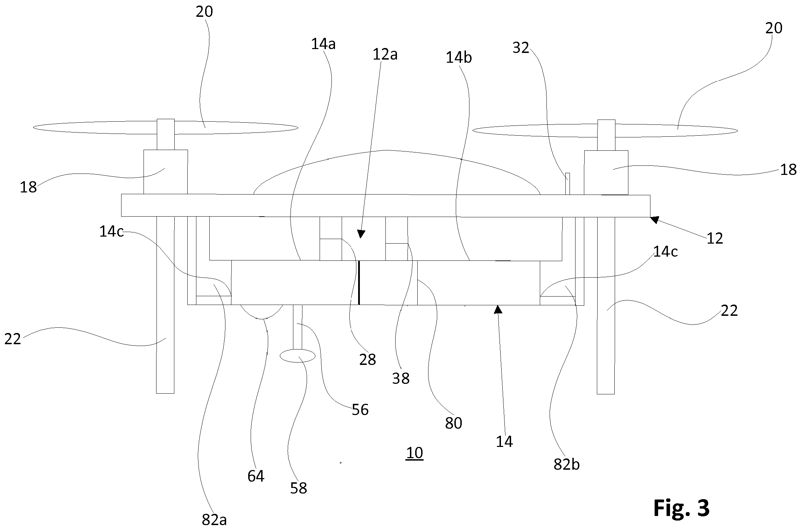

In Fig. 1 ist schematisch ein Trägersystem 10 dargestellt, welches aus einem Träger in Form einer Flugdrohne 12 und einer mobilen Vorrichtung 14 zur Bearbeitung des Bodens und zur Manipulation der Flora und Fauna in der Landwirtschaft besteht. Die Flugdrohne 12 umfasst einen Antrieb 16, der vier Elektromotoren 18 und über diese angetriebene Propeller 20 umfasst, siehe Figur 3. Zudem ist die Flugdrohne 12 mit 4 Füßen 22 unterhalb der Elektromotoren 18 versehen.

Gemäß der ersten Ausführungsform der Erfindung umfasst die Flugdrohne 12 eine Energiequelle in Form von Batterien 24, welche die Energieversorgung für den Antrieb 16 als auch für die weiteren Aggregate der Flugdrohne 12 sowie die mobile Vorrichtung 14 liefert. Hierfür ist eine Spannungsschnittstelle 26a an der Flugdrohne 12 und eine zu dieser Spannungsschnittstelle 26a korrespondierende Spannungsschnittstelle 26b an der mobilen Vorrichtung 14 vorgesehen, welche über eine lösbare Steckverbindung 28 miteinander verbunden sind. Zudem ist eine Kommunikationseinheit 30 mit einer Antenne 32 und eine GPS-Einheit 34 vorgesehen, welche fortlaufend den Standort der Flugdrohne 12 ermittelt, diese Standortdaten der Flugdrohne 12 an die mobile Vorrichtung 14 für die Zuordnung zu den von der mobilen Vorrichtung 14 erfassten Daten sowie an eine entfernt gelegene zentrale Recheneinheit übermittelt, die hier nicht näher dargestellt ist. Mithilfe der GPS-Einheit 34, der Kommunikationseinheit 30 und der mobilen Vorrichtung 14 kann Telemetrie durchgeführt werden. Zudem ist eine Steuereinrichtung 12b vorgesehen, welche den Antrieb 16 steuert.

Die Kommunikationseinheit 30 der Flugdrohne 12 umfasst neben der Antenne 32 eine weitere Schnittstelle 36a, welche einer zugeordneten Schnittstelle 36b der mobilen Vorrichtung 14 zugeordnet ist und über eine lösbare Steckverbindung 38 zum Datenaustausch hierüber miteinander verbunden sind.

Die mobile Vorrichtung 14 besteht aus zwei Einheiten 14a, 14b, nämlich einer ersten Einheit 14a mit einem ersten Gehäuse 40 und einer zweiten Einheit 14b mit einem zweiten Gehäuse 42. Das erste Gehäuse 40 und das zweite Gehäuse 42 sind lösbar über eine Steckverbindung 44 miteinander zu einer die mobile Vorrichtung 14 bildenden Einheit verbunden. Es gibt einen Satz unterschiedliche erste Einheiten 14a auf der einen Seite und einen Satz unterschiedlicher zweite Einheiten 14b auf der anderen Seite, welche durch einfaches miteinander verbinden individuell konfiguriert und an die Bedürfnisse angepasst werden können.

In dem ersten Gehäuse 40 ist ein erster Rechner 46, ein Aktor in Form eines beweglichen, motorisch angetriebenen Arms 48, ein mit dem Arm 48 zusammenwirkender Motor 50, ein an dem Arm 48 angeordnete Werkzeugeinheit 52, welche eine Vorschubeinheit 54 und eine Rotationseinheit 56 aufweist. An dem distalen Ende der Rotationseinheit 56 ist eine Fräse 58 als Werkzeug vorgesehen. Der Motor 50 treibt sowohl den Arm 48 als auch die Vorschubeinheit 54, die Rotationseinheit 56 und damit auch die Fräse 58 an. Der Arm 48 kann mehrteilig ausgebildet sein und über verschiedene Gelenke verfügen, welche im Einzelnen nicht dargestellt sind, da derartige motorisch betriebene Kinematiken bekannt sind. Über den Arm 48 wird die Werkzeugeinheit 52 relativ zur Flugdrohne 12 zu ihrem Einsatzbereich bewegt, so dass die Werkzeugeinheit 52 mit der Vorschubeinheit 54 und der Rotationseinheit 56 die Fräse 58 zur Bearbeitung der Pflanzen, beispielsweise Entfernen von Beikraut, und/oder zum Bearbeiten des Bodens einsetzen kann.

Weiterhin ist in der ersten Einheit 14a eine Kommunikationseinheit 60 und eine visuelle Detektionseinheit 62 vorgesehen. Die visuelle Detektionseinheit 62 umfasst eine Kamera 64, mit der Bilder erfasst werden, eine Segmentierungs- und Datenreduktionseinrichtung 66, einen Klassifikator 68, der auf Basis eines von der Segmentierung- und Datenreduzierungseinrichtung 66 erzeugten Zwischenbildes oder Zwischendaten die Klassifikation mehrerer aus Pixeln bestehender Pixelfelder übernimmt, wie weiter unten noch näher beschrieben wird. Die visuelle Detektionseinheit 62 ist mit der Kommunikationseinheit 60 verbunden.

Die erste Einheit 14a weist eine Schnittstelle 70a auf, welche einer Schnittstelle 70b der zweiten Einheit 14b zugeordnet ist. Über eine Kommunikationsverbindung 72 ist die Kommunikationseinheit 60 über die Schnittstelle 70a mit der Schnittstelle 70b und darüber mit einer Kommunikationseinheit 74 in der zweiten Einheit 14b verbunden. Die Kommunikationseinheit 74 der zweiten Einheit 14b ist über die Schnittstelle 36b über die Steckverbindung 38 mit der Schnittstelle 36a und der Kommunikationseinheit 30 der Flugdrohne 12 verbunden.

In der zweiten Einheit 14b sind zudem ein zweiter Rechner 76 und eine Datenbank 78 vorgesehen.

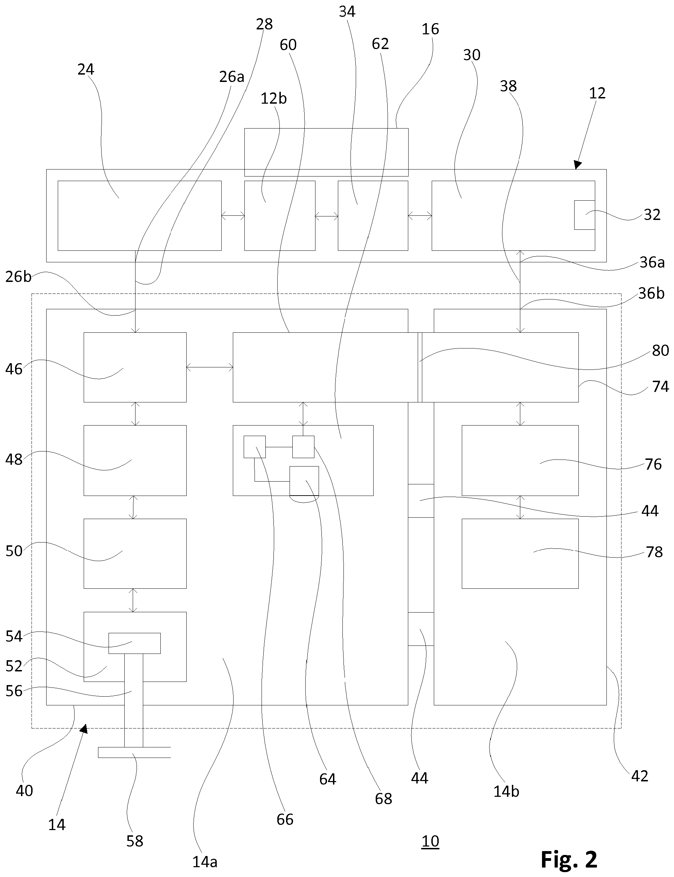

In der Fig. 2 ist eine weitere Ausführungsform des Trägersystems 10 dargestellt, wobei die Flugdrohne 12 identisch mit der ersten Ausführungsform ausgebildet ist. Lediglich die mobile Vorrichtung 14 unterscheidet sich durch eine Steckverbindung 80 zwischen der ersten Einheit 14a und der zweiten Einheit 14b, welche zudem auch die Kommunikationseinheit 60 der ersten Einheit 14a mit der Kommunikationseinheit 74 lösbar verbindet. Durch einfaches Zusammenstecken können unterschiedliche erste Einheiten 14a mit unterschiedlichen zweiten Einheiten 14b kombiniert und zu einer mobilen Einheit 14 zusammengefügt werden.

In Fig. 3 ist die Flugdrohne 12 in Seitenansicht dargestellt, wobei dadurch lediglich zwei von vier Elektromotoren 18 mit zugeordneten Propellern 20 sichtbar sind. Unterhalb der Elektromotoren 18 sind jeweils die Füße 22 angeordnet. Zwischen den Füßen 22 sind zwei Greifarme 82a, 82b vorgesehen, welche die mobile Vorrichtung 14 bedarfsweise ergreifen und anheben und wieder absetzen und ablegen. Die mobile Vorrichtung 14 besteht aus den beiden Einheiten 14a und 14b, welche über die Steckverbindung 80 miteinander lösbar verbunden sind. In der ersten Einheit 14a ist die Kamera 64 als Teil der visuellen Detektionseinheit 62 sowie die Fräse 58 an dem distalen Ende der Rotationseinheit 56 erkennbar.

Die mobile Vorrichtung 14 kann auch mit mehreren unterschiedlichen Werkzeugeinheiten 52 ausgerüstet sein, welche mit einem gemeinsamen Arm 48 und beispielsweise einen Werkzeugrevolver versehen ist, der die benötigte Werkzeugeinheit 52 in die Aktivierungsposition bringt. Denkbar ist aber auch, dass die unterschiedlichen Werkzeugeinheiten jeweils einen eigenen Aktor aufweisen.

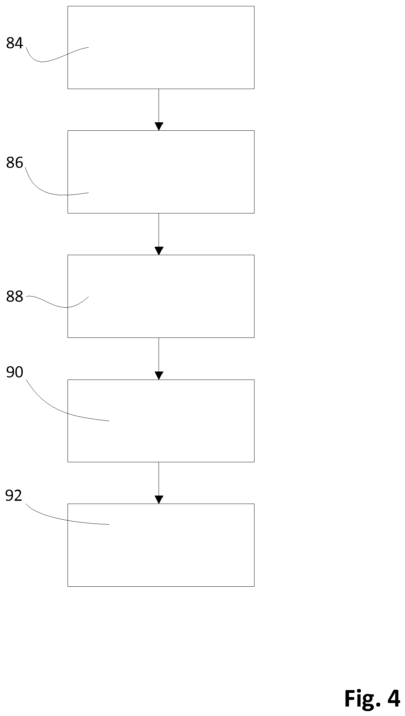

In Fig. 4 sind in einem Flussdiagramm die Schritte aufgezeigt, welche nacheinander durchlaufen werden, um mit dem Trägersystem 10 eine Bearbeitung des Bodens und die Manipulation von Flora und Fauna in der Landwirtschaft durchzuführen.

In einem ersten Schritt 84 werden zunächst mit dem Trägersystem 10 die notwendigen Maßnahmen auf der zugeordneten landwirtschaftlichen Fläche ermittelt. Beispielsweise wird hierfür das Trägersystem 10 zu einer zu bearbeitenden landwirtschaftlichen Fläche, beispielsweise zu einem landwirtschaftlichen Feld, gebracht oder direkt von einem zentralen Ort aus dorthin geflogen. Die Flugdrohne 12 mit der mobilen Vorrichtung 14 startet und fliegt das landwirtschaftliche Feld ab. Über eine ortsfeste zentrale Recheneinheit erhält das Trägersystem 10 die notwendigen Daten über das zu begutachtende landwirtschaftliche Feld. Die zentrale Recheneinheit kann hierbei auch ein Smartphone sein. Über die visuelle Detektionseinheit 62 mit der Kamera 64 der mobilen Vorrichtung 14 wird das landwirtschaftliche Feld in Bildern erfasst. Die Bilder werden ausgewertet und mit einem Abgleich in der Datenbank 78 die notwendigen Maßnahmen für dieses landwirtschaftliche Feld schlussendlich ermittelt.

In einem nächsten Schritt 86 wird auf Grundlage der ermittelten Maßnahmen für das landwirtschaftliche Feld oder für Teilbereiche des landwirtschaftlichen Feldes aus einem Satz erster Einheiten 14a und einem Satz unterschiedlicher zweiter Einheiten 14b die für die notwendige Maßnahme geeignete mobile Einheit 14 zusammengestellt und die beiden Einheiten 14a, 14b miteinander verbunden.

In einem nächsten Schritt 88 wird die mobile Vorrichtung 14 mit der Flugdrohne 12 über den Greifarm 82a und den Greifarm 82b jeweils seitlich ergriffen und durch diesen in Richtung Flugdrohne 12 nach oben in eine Aufnahme 12a der Flugdrohne 12 verfahren. Dabei werden die Spannungsschnittstellen 26a, 26b über die Steckverbindung 28 und die Schnittstellen 36a, 36b über die Steckverbindung 38 miteinander verbunden. Hierdurch wird die mobile Vorrichtung 14 mit Spannung aus der Batterie 24 der Flugdrohne 12 versorgt und ein Datenaustausch über die Antenne 32 der Kommunikationseinheit 30 der Flugdrohne 12 mit den Kommunikationseinheiten 60 und 74 der mobilen Vorrichtung 14 auf der einen Seite und einer zentralen Recheneinheit auf der anderen Seite ermöglicht. Wie oben ausgeführt, kann die zentrale Recheneinheit, welche vom Trägersystem 10 unabhängig ist, auch ein Smartphone sein.

In einem nächsten Schritt 90 werden die ermittelten Maßnahmen mit dem Trägersystem 10 auf dem landwirtschaftlichen Feld durchgeführt. Beispielsweise fliegt die Flugdrohne 12 zu dem zu bearbeitenden Bereich des landwirtschaftlichen Feldes. Der Arm 48 mit der Werkzeugeinheit 52 fährt zu dem zu entfernenden Beikraut. Die Vorschubeinheit 54 verfährt die Fräse 58 so zu dem Beikraut, dass dieses mit Aktivieren der Rotationseinheit 56 weggefräst wird.

In einem fünften Schritt 92 fliegt dann die Flugdrohne 12 zurück, und tauscht die mobile Vorrichtung 14 gegen eine andere mobile Vorrichtung 14 aus, welche für eine andere Maßnahme optimiert ist, beispielsweise mit einer Ausbringvorrichtung für Schädlingsbekämpfungsmittel oder Dünger.

Alternativ können die Schritte 86 und 88 auch entfallen, wenn die Flugdrohne 12 bereits fertig für die durchzuführende Maßnahme gerüstet ist.

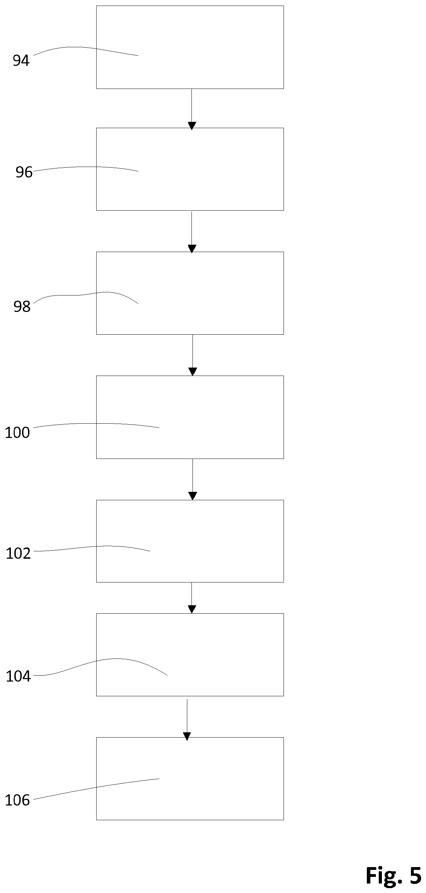

Anhand der Figur 5 wird nunmehr das Ermitteln der notwendigen Maßnahmen durch das Trägersystem 10, insbesondere durch die mobile Vorrichtung 14 im Einzelnen dargelegt.

In einem ersten Schritt 94 erfolgt die kontinuierliche Aufnahme von Daten technisch definierter Voxel und/oder Pixel und/oder Bilder durch die visuelle Detektionseinheit 62 der mobilen Vorrichtung 14. Die Voxel, Pixel und Bilder bilden Aufnahmedaten, welche fortlaufend an die Datenbank 78 übermittelt werden - zweiter Schritt 96.

In einem dritten Schritt 98 erfolgt die erfolgt die Speicherung der Aufnahmedaten.

In einem vierten Schritt 100 erfolgt ein qualitativer Datenabgleich der Aufnahmedaten mit den in der Datenbank 78 hinterlegten Daten. Hierbei erfolgt die Durchführung einer Segmentierung und Datenreduktion der Aufnahmedaten durch die Segmentierung- und Datenreduktioneinrichtung 66. Insbesondere kann auch eine Verifikation der Aufnahmedaten durch den zweiten Rechner 76 erfolgen.

In einem fünften Schritt 102 erfolgt die Bewertung durch den Klassifikator 68 in Verbindung mit dem zweiten Rechner 76 durch Unterstützung von Künstlicher Intelligenz, wie weiter unten noch ausführlich dargelegt wird.

In einem sechsten Schritt 104 erfolgt schließlich die Verarbeitung und Umsetzung der Bewertung durch den ersten Rechner 46 in regelungs- und steuerungstechnische Daten für den Motor 50, den Arm 48, die Werkzeugeinheit 52 und die Flugdrohne 12.

In einem siebten Schritt 106 erfolgt schließlich das Anfahren des Motors 50, des Arms 48 und der Werkzeugeinheit 52 zur Bearbeitung des Bodens oder zur Manipulation von Flora und Fauna.

Sofern in dieser Anmeldung von Künstlicher Intelligenz gesprochen wird, handelt es sich unter anderem um die Verwendung eines klassischen Convolutional Neural Networks - CNN - aus einem oder mehreren Convolutional Layer, gefolgt von einem Pooling Layer. Diese Folge aus Convolutional Layer und Pooling Layer kann sich prinzipiell beliebig oft wiederholen. In der Regel liegt die Eingabe als zwei- oder dreidimensionale Matrix, z. B. die Pixel eines Graustufen- oder Farbbildes, vor. Dementsprechend sind die Neuronen im Convolutional Layer angeordnet.

Die Aktivität jedes Neurons wird über eine diskrete Faltung (convolutional) berechnet. Intuitiv wird dabei schrittweise eine vergleichsweise kleine Faltungsmatrix (Filterkernel) über die Eingabe bewegt. Die Eingabe eines Neurons im Convolutional Layer berechnet sich als inneres Produkt des Filterkernels mit dem aktuell unterliegenden Bildausschnitt. Dementsprechend reagieren benachbarte Neuronen im Convolutional Layer auf sich überlappende Bereiche.

Ein Neuron in diesem Layer reagiert nur auf Reize in einer lokalen Umgebung des vorherigen Layers. Dies folgt dem biologischen Vorbild des rezeptiven Feldes. Zudem sind die Gewichte für alle Neuronen eines Convolutional Layers identisch (geteilte Gewichte, englisch: shared weights). Dies führt dazu, dass beispielsweise jedes Neuron im ersten Convolutional Layer codiert, zu welcher Intensität eine Kante in einem bestimmten lokalen Bereich der Eingabe vorliegt. Die Kantenerkennung als erster Schritt der Bilderkennung besitzt hohe biologische Plausibilität. Aus den shared weights folgt unmittelbar, dass Translationsinvarianz eine inhärente Eigenschaft von CNNs ist.

Der mittels diskreter Faltung ermittelte Input eines jeden Neurons wird nun von einer Aktivierungsfunktion, bei CNNs üblicherweise Rectified Linear Unit, kurz ReLu (f(x) = max(0, x), in den Output verwandelt, der die relative Feuerfrequenz eines echten Neurons modellieren soll. Da Backpropagation die Berechnung der Gradienten verlangt, wird in der Praxis eine differenzierbare Approximation von ReLu benutzt: $f(x) = \ln(1 + e^x)$. Analog zum visuellen Cortex steigt in tiefer gelegenen Convolutional Layers sowohl die Größe der rezeptiven Felder als auch die Komplexität der erkannten Features.

Im folgenden Schritt, dem Pooling, werden überflüssige Informationen verworfen. Zur Objekterkennung in Bildern etwa, ist die exakte Position einer Kante im Bild von vernachlässigbarem Interesse - die ungefähre Lokalisierung eines Features ist hinreichend. Es gibt verschiedene Arten des Poolings. Mit Abstand am stärksten verbreitet ist das Max-Pooling, wobei aus jedem 2 × 2 Quadrat aus Neuronen des Convolutional Layers nur die Aktivität des aktivsten (daher "Max") Neurons für die weiteren Berechnungsschritte beibehalten wird; die Aktivität der übrigen Neuronen wird verworfen. Trotz der Datenreduktion (im Beispiel 75 %) verringert sich in der Regel die Performance des Netzwerks nicht durch das Pooling.

Der Einsatz des Convolutional Neural Networks und der Segmentierung- und Datenreduzierungseinrichtung 66 wird im Folgenden anhand der Bilder 6 bis 14 näher erläutert.

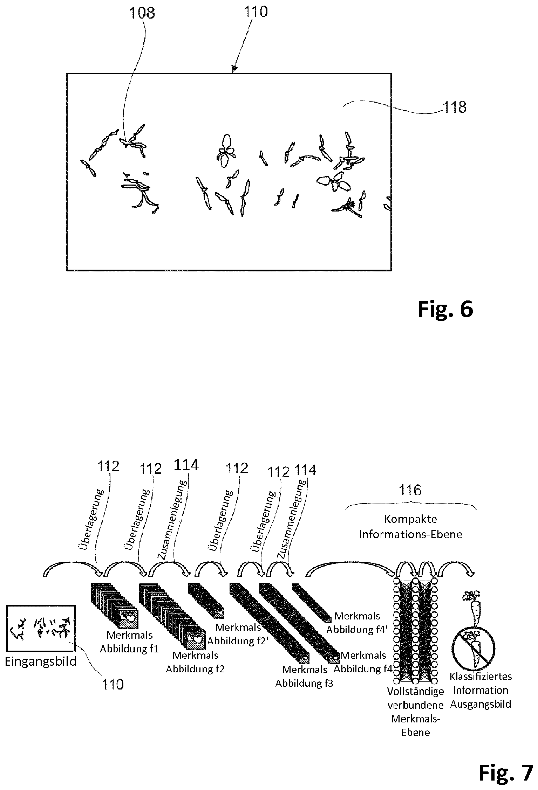

Für die Klassifikation durch den Klassifikator 68 aller Objekte in einem Bild existieren verschiedene Ansätze. Viele Ansätze beginnen damit die einzelnen Objekte erst im Bild zu finden und anschließend zu klassifizieren. Dies ist jedoch nicht immer möglich. Als Beispiel soll hier die Klassifikation von Pflanzen 108 eines Feldes herangezogen werden. Ein Beispielbild 108 zeigt Fig. 6.

In Fig. 6 sind verschiedene Pflanzen 108 abgebildet und sollen durch den Klassifikator 68 alle klassifiziert werden und dies in Echtzeit. Die Echtzeit soll in diesem Fall hier der Kameratakt von 10 Bilder pro Sekunde sein. Da wie hier im Beispiel nicht einfach unterschieden werden kann, wo genau eine Pflanze 110 endet, muss eine andere Herangehensweise verwendet werden, da die Rechenzeit nicht ausreicht, erst die Pflanzen 110 an sich zu unterscheiden und anschließend noch zu klassifizieren.

Das Bild 108 von Fig. 6 besteht aus Pixeln und jeder Pixel kann logischerweise nur genau eine Klasse beinhalten. Daher wäre ein trivialer Ansatz das gesamte Bild 108 pixelweise zu klassifizieren. Das soll heißen jeder Pixel wird nacheinander einer Klasse zugeordnet.

Da jedoch ein einzelner Pixel nicht die nötige Information enthält, um eine Aussage über die Klassenzugehörigkeit zu treffen, muss eine umliegende Fläche zur Klassifikation herangezogen werden. Diese Fläche kann dann mit einen Convolution Neuronalen Netzwerk (CNN), wie es oben beschrieben wurde, klassifiziert werden. Das Netzwerk kann dabei eine Folge wie Fig. 7 aufweisen.

Das Eingangsbild 110 ist hier das Bild von Fig. 6. Auf dieses Eingangsbild 110 werden nun die Elemente des CNN angewendet. In diesem Beispiel wären das die Convolution 112 mit den Featuren, ein anschließendes Pooling 114, eine weitere Convolution mit weiteren Featuren, ein erneutes Pooling und eine Zusammenfassung in der Dense Schicht 116. Der Ausgang des Netzwerkes gibt dann die Klassenzugehörigkeit des mittleren Pixels des Eingangsbildes 110 aus, beziehungsweise eines Pixels des Bildes 110 von Fig. 6.

Anschließend wird ein neuer Bildausschnitt, in der Regel ein Bildausschnitt das um einen Pixel verschoben ist, gewählt und wieder mittels CNN klassifiziert. Dieses Vorgehen hat zur Folge, dass die Berechnungen, die das Convolution Neuronale Netzwerk benötigt, für die Anzahl der zur klassifizierenden Pixeln wiederholt werden muss. Dies ist zeitaufwändig. Das Bild 110 von Fig. 6 hat eine Auflösung von 2000 × 1000 Pixeln. Das CNN müsste also zwei Millionen Mal berechnet werden. Das Ausgangsproblem ist jedoch nur die Klassifikation der Pflanzen 108 an sich. Im Durchschnitt enthält ein solches Bild etwa 5% Pflanzenpixel, welche etwa nur 100.000 Pixel entsprechen.

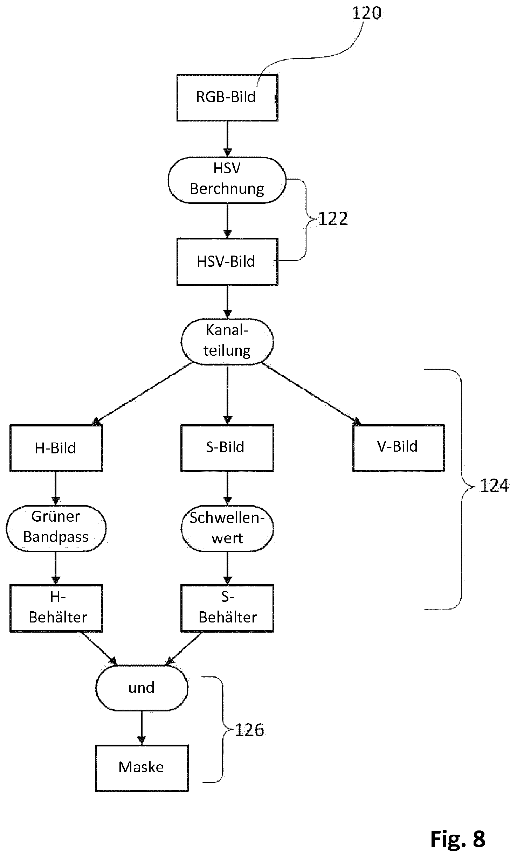

Mittels einfacher Segmentierung und Datenreduktion durch die Segmentierungs- und Datenreduktionseinheit 66 kann herausgefunden werden, ob es sich bei einem Pixel um die Darstellung eines Teils einer Pflanze 108 oder um Hintergrund 118 handelt. Diese Segmentierung ist von der Berechnung nicht so komplex wie ein CNN und daher schneller. Die Segmentierung und Datenreduktion durch die Segmentierung- und Datenreduktioneinheit 66 erfolgt dabei analog der Fig. 8. In Fig. 8 sind die einzelnen Schritte dargestellt.

In einem ersten Schritt 120 wird jedes an die Datenbank 78 übermittelte Bild aus mehreren Pixeln in das RGB-(Red, Green, Blue)-Farbmodell überführt.

In einem nächsten Schritt 122 wird jedes Pixel des übermittelten Bildes basierend auf dem RGB-Farbmodell in ein HSV (hue, saturation, value)-Farbmodell transferiert.

In einem nächsten Schritt 124 wird dieses HSV-Farbmodell bewertet.

Jeder Pixel basierend auf dem HSV-Farbmodell wird im Hinblick auf die Farbsättigung (saturation) anhand eines Schwellenwertes bewertet, wobei wenn der Wert der Farbsättigung einen Schwellenwert übersteigt, dass Pixel dem binären Wert 1 zugeordnet wird, und wenn der Wert der Farbsättigung einen Schwellenwert unterschreitet, das Pixel dem binären Wert 0 zugeordnet wird.

Parallel hierzu wird jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert 1 zugeordnet wird, und wenn der Farbwinkel außerhalb des Bereichs liegt, das Pixel dem binären Wert 0 zugeordnet wird.

In einem nächsten Schritt 126 wird aus den binären Informationen des Farbwinkels und der Farbsättigung ein Zwischenbild erzeugt, welches erheblich weniger Daten als das von der Kamera erzeugte Bild 108 enthält.

Aus der Segmentierung aus Fig. 8 ergibt sich die im Folgenden angegebene Formel, die auf jeden Pixel angewendet werden muss. Das segmentierte Bild S(x,y) wird über die Aufteilung des RGB Bildes $\psi(x,y)$ in seine drei Bestandteile Rot, Grün und Blau aufgeteilt. Ein Pixel des segmentierten Bildes wird dann auf 1 gesetzt wenn der minimale Wert von Rot, Grün oder Blau eines Pixels durch den Grünen Pixel geteilt kleiner oder gleich ist wie ein Schwellenwert (*THs*). Wobei der Schwellenwert in den 8 Bit Raum des Bildes über die Skalierung mittels 255 erfolgt. Sollte der Schwellenwert nicht erreicht werden, wird wie in Gleichung 1 der Pixel des segmentierten Bildes auf 0 gesetzt.

$$S(x,y) = \begin{cases} 1 & \text{if } \dfrac{MIN(\psi_{Red}(x,y), \psi_{Green}(x,y), \psi_{Blue}(x,y))}{\psi_{Green}(x,y)} \leq \dfrac{255 - THs}{255} \\ 0 & \text{otherwise} \end{cases} \qquad (1)$$

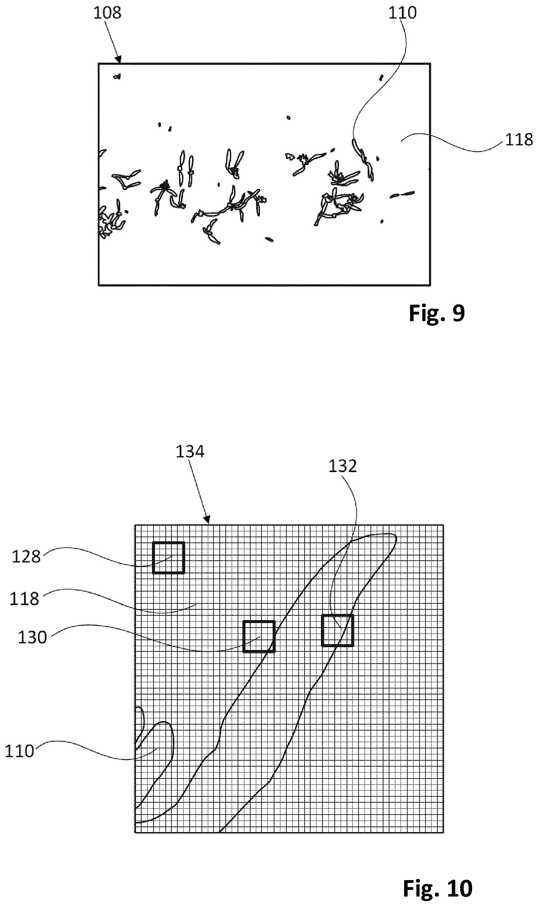

Damit ergibt sich die erste Optimierung: Bevor das gesamte Bild 108 in zwei Millionen Bilder zerlegt wird, wird die Segmentierung, gemäß Fig. 8, angewendet. Das heißt das gesamte Bild 108 wird durchlaufen und mittels der oben angegebenen Formel entschieden, ob es sich um ein Pflanzenpixel handelt oder nicht. Zum einen wird das Bild 108 segmentiert, das heißt der Hintergrund 118 wird auf Schwarz (0) gesetzt, wie dies in Fig. 9 dargestellt ist. Zum anderen wird, sofern es sich um ein Pflanzenpixel handelt, dessen Koordinaten in eine Liste geschrieben. Anschließend werden nur noch die Koordinaten in das CNN gegeben, die auch in dieser Liste stehen. Die unnötigen Pixel der Erde, also des Hintergrundes 118, entfallen. Damit wird das CNN in etwa 20-mal weniger aufgerufen.

Durch die Segmentierung wird der Hintergrund 118 auf den Wert 0 gesetzt. Auch die Bildelemente, die das CNN betrachtet, besitzen nun segmentierte Bilder. Normalerweise würde auf eine Convolution-Schicht die Feature-Berechnung auf jeden Pixel des Bildelementes angewendet werden. Damit ergeben sich jedoch drei Fälle 128, 130, 132 für die Berechnung, die in Fig. 10 dargestellt sind, jeweils für einen Feature 134 der Größe 5x5.

Der Rote Fall 128 zeigt eine Feature-Berechnung, in dem das Feature komplett auf dem Hintergrund 118 liegt. Hier wird jedes Element mit 0 multipliziert, das hat zur Folge, dass die gesamte Berechnung 0 ergibt, beziehungsweise den Biaswert. Das Ergebnis dieser Berechnung ist daher schon vor der Rechnung bekannt. Selbst wenn der Hintergrund 118 nicht null wäre, also Erde aufweisen würde, würde diese Berechnung keine Information über die Pflanze 110 beinhalten, daher kann das Ergebnis einfach ein konstanter fiktiver Wert sein.

Im Gelben Fall 130 liegt der mittlere Feature-Wert nicht auf einer Pflanze 110. Das heißt, dass ein Teil ebenfalls eine Multiplikation mit Null ist. Dieser Fall verzehrt die Pflanze 110 im Randbereich und macht diese Größe in der Feature-Map.

Im Blauen Fall 132 liegt mindestens der mittlere Pixel des Features auf einer Pflanze.

Nach Betrachtung dieser drei Fälle 128, 130, 132 müssen nur der Gelbe und Blaue Fall 130 und 132 berechnet werden. Also die Fälle 130, 132 in denen das Feature mindestens einen Eingangswert ungleich Null hat. Von allen anderen Feature-Berechnungen sind Ergebnisse vor der Berechnung bekannt, sie sind Null beziehungsweise weisen lediglich den Bias Wert auf. Die Koordinaten, in denen der Blaue Fall 132 auftritt, sind bekannt. Das sind die Koordinaten, die bei der Segmentierung gespeichert werden. Der Gelbe Fall 130 benötigt wiederum eine Berechnung, ob diese eingetreten ist. Dies verlangt eine Überprüfung jedes in der Segmentierung gefundenen Pflanzenpixels. Da diese Kontrolle ein zu großer Aufwand ist und der Gelbe Fall 130 nur im Randbereich einer Pflanze 110 auftritt, soll dieser Fall ignoriert werden.

Daher kann die Berechnung dahingehend optimiert werden, dass die Feature-Berechnung und alle anderen Elemente des CNNs nur auf die gefundenen Pflanzenpixel angewendet werden sollen.

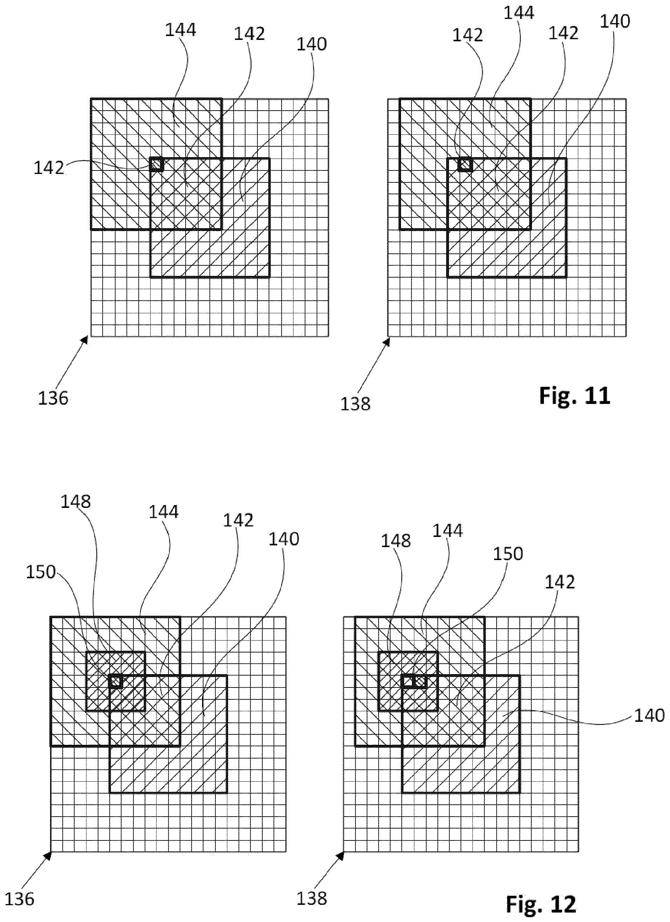

In Fig. 11 ist schematisch dargestellt, wie sich zwei benachbarte Pflanzenpixel 136, 138 unterscheiden. Links ein Pflanzenpixel 136 und rechts der Nachbar-Pflanzenpixel 138. Der Blaue/Purpur Bereich 140, 142 könnten verschiedene Pflanzen sein, die klassifiziert werden müssen. Der Rote/Purpur Bereich 144, 142 stellt das Bildelement da, das das CNN betrachtet, um den orangenen Pixel 146 zu klassifizieren.

Bei genauer Betrachtung kann festgestellt werden, dass der betrachtete Bereich (Rot/Purpur) 144, 142 sich stark überlappt. Das bedeutet wiederum, dass in beiden Bildelementen 136, 138 größtenteils dieselben Werte stehen. Wenn nun das CNN das Feature in der Convolution-Schicht berechnet, würde auch aus der Feature-Berechnung dieselben Werte errechnet werden.

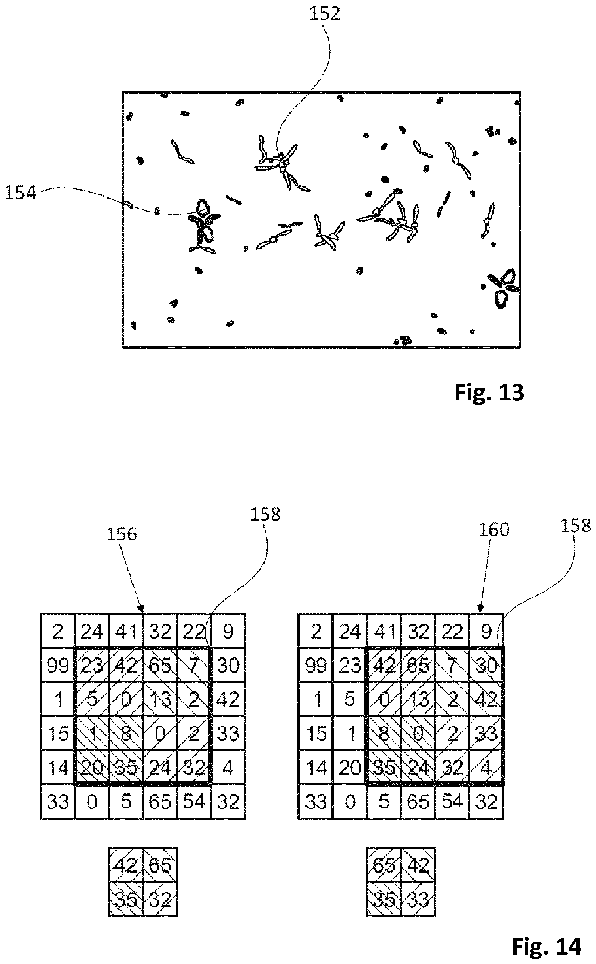

In Fig. 12 ist schematisch ein Feature 148 mit der Größe von $5 \times 5$ Pixel in Grün skizziert. Dieses Feature 148 steht an denselben Koordinaten innerhalb des gesamten Bildes, jedoch ist es verschoben innerhalb des vom CNN zu betrachtenden Bildelementes (Rot/Purpur) 144, 142. Da die Örtlichkeit jedoch im gesamten Bild dieselbe ist würde die Berechnung für den mittleren schwarzen Kasten 150 denselben Wert sowohl im linken Bild 136 als auch im rechten Bild 138 ergeben. Diese Erkenntnis lässt sich auf alle Elemente eines CNN anwenden. Dadurch kann, sofern der Randbereich ignoriert wird, die einzelne Feature-Berechnung zuerst auf das gesamte Bild angewendet werden. Theoretisch spielt die Zerlegung des Eingangsbildes 108 erst mit dem Dense-Layer 116 eine entscheidende Rolle. Das Dense-Layer 116 kann jedoch genauso wie eine Convolution 112 berechnet werden. Die Featuregröße ergibt sich dabei aus dem Zusammenspiel von Eingangsbildgröße und den vorhandenen Pooling Layern im Netzwerk. Damit lässt sich die Klassifikation weiter optimieren, es werden nun die CNN Elemente lediglich auf die gefundenen Pflanzenpixel angewendet. Die Feature-Map, die aus der letzten Convolution errechnet wird, stellt das Klassifikationsergebnis dar, wie dies in Fig. 13 dargestellt ist. Hier sind in Grün alle Karottenpflanzen 152 und in Rot das gesamte Unkraut 154 Pixelweise klassifiziert.

Durch diese Optimierungen erfolgen jedoch auch Veränderungen am Ergebnis der Klassifikation. Den größten Einfluss haben hierbei die Pooling Schichten. Bei jedem Pooling wird Information aus dem Netzwerk entfernt. Durch das nicht mehr vorhandene einzelne Betrachten der Bildelemente verliert das Pooling jedoch einen örtlichen Bezug. Die Fig. 14 veranschaulicht das Problem.

In der Fig. 14 ist jeweils ein Bildelement 156 als roter Rahmen 158 dargestellt. Vor der Optimierung würde jedes Bildelement einzeln durch das CNN laufen um seinen mittleren Pixel zu klassifizieren. Das rechte Bildelement 160 ist um einen Pixel weiter nach rechts verschoben. Die vier Farben: Purpur, Blau, Gelb und Grün zeigen die einzelnen Anwendungen des Poolings an. Wie zu sehen ist, können sie verschiedene Ergebnisse ergeben, da das Pooling immer am Rand beginnt und um ein Pooling Element (hier zwei Felder) weiterwandert. Dadurch ergeben sich aus zwei benachbarten Bildelementen 156, 160 zwei verschiedene Pooling Elemente. Das hat zur Folge, wenn dies in der Optimierung berücksichtigt werden soll, würden sich mit jedem Pooling zwei neue Zweige für die weitere Berechnung ergeben. Da das Pooling einmal auf das gesamte Bild angewendet werden müsste mit Startpunkt oben links und ein weiteres Pooling mit dem Startpunkt oben links plus ein Pixel. In der weiteren Berechnung müssten dann beide Pooling Ergebnisse separat weiterverarbeitet werden. Bei einem weiteren zweiten Pooling würden sich wieder zwei neue Pfade ergeben, so dass vier separate Ergebnisse berechnet werden müssten. Das Ergebnis setzt sich anschließend aus den vier Ergebnissen Pixelweise rotierend durch die Ergebnisse zusammen. Wird nur ein Pfad nach dem Pooling betrachtet, wäre das Ausgangsbild nach zweimaligem Pooling kleiner. Die Länge und Breite des Ausgangsbildes wäre dann jeweils nur ¼ so groß wie das Eingangsbild. Bei der Betrachtung aller Pfade würde etwa die Eingangsbildgröße herauskommen.

Ein weiterer Unterschied stellen die fehlenden Randbereiche der Pflanzen dar. Da die Features nicht auf alle Elemente angewendet werden, indem sie irgendeine Überlappung mit der Pflanze besitzen, existieren hier Berechnungsunterschiede. Auch dies kann das Klassifikationsergebnis verändern zu der herkömmlichen Berechnung.

Die fehlende Berechnung der Feature-Werte außerhalb der Pflanze können dahingehend andere Werte hervorrufen, da das Ergebnis mit Null ausgewiesen wird, was allerdings in Wirklichkeit der Biaswert ist.

Zwar beeinflussen diese drei Faktoren die Ergebnisse, jedoch zeigt sich dass das CNN sehr robust ist und damit die Ergebnisse immer noch einen sehr hohen Genauigkeitswert erfüllen.

Der nächste Schritt wäre, das Netzwerk direkt mit diesen Modifikationen zu trainieren, damit das Netzwerk sich noch besser auf seine neue Berechnung einstellen kann und somit etwaige Fehler direkt in der Berechnung kompensiert.

Die Segmentierung- und Datenreduktionseinrichtung versieht die Pixel betreffend das Unkraut 154 mit Lagekoordinaten.

**Bezugszeichenliste**

| | |
|---|---|
| 10 | Trägersystem |
| 12 | Flugdrohne |
| 12a | Aufnahme, Aufnahmeraum der Flugdrohne 12 |
| 12b | Steuereinrichtung der Flugdrohne |
| 14 | mobile Vorrichtung |
| 14a | erste Einheit |
| 14b | zweite Einheit |
| 14c | Aufnahme für Greifarm an der mobilen Vorrichtung 14 |
| 16 | Antrieb |
| 18 | Elektromotor |
| 20 | Propeller |
| 22 | Füße |
| 24 | Batterie |
| 26a | Spannungsschnittstelle an der Flugdrohne 12 |
| 26b | Spannungsschnittstelle an der mobilen Vorrichtung 14 |
| 28 | Steckverbindung |
| 30 | Kommunikationseinheit |
| 32 | Antenne |
| 34 | GPS-Einheit |
| 36a | Schnittstelle an der Flugdrohne 12 |
| 36b | Schnittstelle an der mobilen Vorrichtung 14 |
| 38 | Steckverbindung |
| 40 | erstes Gehäuse der ersten Einheit 14a |
| 42 | zweites Gehäuse der zweiten Einheit 14b |
| 44 | Steckverbindung |
| 46 | erster Rechner |
| 48 | Arm als Aktor |
| 50 | Motor |
| 52 | Werkzeugeinheit |
| 54 | Vorschubeinheit |
| 56 | Rotationseinheit |
| 58 | Fräse |
| 60 | erste Kommunikationseinheit der ersten Einheit 14a |
| 62 | visuelle Detektionseinheit |
| 64 | Kamera |
| 66 | Segmentierung- und Datenreduktioneinrichtung |
| 68 | Klassifikator |
| 70a | Schnittstelle der ersten Einheit 14a |
| 70b | Schnittstelle der zweiten Einheit 14b |
| 72 | Kommunikationsverbindung |
| 74 | zweite Kommunikationseinheit der zweiten Einheit 14b |

76 zweiter Rechner
78 Datenbank
80 Steckverbindung
82a Greifarm, links
82b Greifarm, rechts
84 erster Schritt: Ermitteln der notwendigen Maßnahmen
86 zweiter Schritt: Aussuchen der mobilen Vorrichtung 14 aus der zur Verfügung stehenden mobilen Vorrichtungen 14
88 dritter Schritt: Verbinden der Vorrichtung mit der Flugdrohne 12
90 vierter Schritt: Durchführen der ermittelten Maßnahmen
92 fünfter Schritt: austauschen der mobilen Vorrichtung 14 gegen eine andere mobile Vorrichtung 14 und Durchführung einer weiteren Maßnahme
94 erster Schritt: kontinuierliche Aufnahme
96 zweiter Schritt: Übermittlung der Daten
98 dritter Schritt: Speicherung der Daten
100 vierter Schritt: Datenabgleich
102 fünfter Schritt: Bewertung durch den Klassifikator 68
104 sechster Schritt: Umsetzung in Regelung-und steuerungstechnische Daten
106 siebter Schritt: Anfahren der Aggregate
108 Beispielsbild, Eingangsbild
110 Pflanze
112 Convolution
114 Pooling
116 Zusammenfassung in einer Dense-Schicht
118 Hintergrund
120 erster Schritt: Überführen in ein RGB-Farbmodell
122 zweiter Schritt: Transferieren in ein HSV-Farbmodell
124 dritter Schritt: Bewertung des HSV-Bildes
126 vierter Schritt: Erzeugen eines Zwischenbildes
128 erster Fall, rot
130 zweiter Fall, gelb
132 dritter Fall, blau
134 Feature
136 Pflanzenpixel, links
138 Pflanzenpixel, rechts
140 blauer Bereich
142 purpurner Bereich
144 roter Bereich
146 oranger Bereich
148 Feature, grün
150 mittlerer schwarzer Kasten
152 Karottenpflanze
154 Unkraut, Beikraut
156 Bildelement, links
158 roter Rahmen
160 Bildelement, rechts

## Patentansprüche

1. Trägersystem (10) mit einem Träger (12) und einer mobilen Vorrichtung (14) mit zumindest einem Sensor (62) und einer Werkzeugeinheit (52) zur Bearbeitung des Bodens und/oder zur Manipulation der Flora und Fauna, wobei der Träger (12) einen Antrieb (16) zum Bewegen des Trägersystems (10), eine Steuereinrichtung (12b), eine Energiequelle (24), welche mit dem Antrieb (16) zusammenwirkt und die notwendige Spannung für den Betrieb zur Verfügung stellt, eine Aufnahme (12a) zum Aufnehmen und Verbinden mit der mobilen Vorrichtung (14), eine Kommunikationseinheit (30), eine erste mit der Kommunikationseinheit (30) zusammenwirkende Kommunikationsschnittstelle (36a) zum Datenaustausch mit der mobilen Vorrichtung (14), welche eine zugeordnete Schnittstelle (36b) aufweist, sowie eine zweite mit der Kommunikationseinheit (30) zusammenwirkende Kommunikationsschnittstelle (32) aufweist, welche zumindest Steuerungsdaten empfängt und an die Steuerungseinrichtung (12b) zum vorbestimmten Bewegen des Trägers (10) weitergibt, wobei der Träger (12) und die mobile Vorrichtung (14) Mittel (12a, 14c, 82a, 82b) zum bedarfsweisen Verbinden miteinander aufweisen und der Träger (12) einen Greifer (82a, 82b) und die mobile Vorrichtung (14) dem Greifer (82a, 82b) zugeordnete Aufnahmen (14c) aufweist, über den die Vorrichtung (14) ergreifbar ist und lösbar mit dem Träger verbunden ist und wobei der Träger (12) als unbemanntes Luftfahrzeug (Flugdrohne), unbemanntes Landfahrzeug, unbemanntes Wasserfahrzeug, oder unbemanntes Unterwasserfahrzeug ausgebildet ist.

2. Trägersystem nach Anspruch 1, **dadurch gekennzeichnet, dass** die zweite Kommunikationsschnittstelle eine Antenne (32) zum Datenaustausch mit einem zentralen, vorzugsweise ortsfesten, von dem Träger (12) separaten Rechner ist.

3. Trägersystem nach Anspruch 2, **dadurch gekennzeichnet, dass** die zweite Kommunikationsschnittstelle (32) auch für einen Datenaustausch mit der mobilen Vorrichtung (14) und dem zentralen Rechner ausgebildet ist.

4. Trägersystem nach einem der vorangehenden Ansprüche, **dadurch gekennzeichnet, dass** der Träger (12) und die mobile Vorrichtung (14) einen Spannungsanschluss (26a, 26b) aufweisen, über den die mobile Vorrichtung (14) mit Spannung versorgbar ist.

5. Trägersystem nach einem der vorangehenden Ansprüche, **dadurch gekennzeichnet, dass** der Träger (12) und die mobile Vorrichtung (14) einander zugeordnete Kupplungsmittel (28, 72) aufweisen, über welche die mobile Vorrichtung (14) lösbar mit dem Träger (12) verbunden ist.

6. Trägersystem nach einem der vorangehenden Ansprüche, **dadurch gekennzeichnet, dass** der Träger eine GPS-Einheit (34) zur Erfassung der Positionskoordinaten des Trägers (10) aufweist.

7. Trägersystem nach einem der vorangehenden Ansprüche, **dadurch gekennzeichnet, dass** die mobile Vorrichtung (14) mit dem zumindest einen Sensor (62) und der Werkzeugeinheit (52) mit zumindest einem motorisch angetriebenen Werkzeug (58), einen Aktor (48) zum Verfahren zumindest des Werkzeugs (58) der Werkzeugeinheit (52), einen Motor (50) zum Antreiben der Werkzeugeinheit (52) und/oder des Aktors (48), eine Datenbank (78), eine erste Kommunikationseinheit (60, 74) mit Schnittstelle (70a, 70b; 36a, 36b) und einen ersten Rechner (46, 76) zum Steuern des Motors (50), des Sensors (62), der Werkzeugeinheit (52) und/oder des Aktors (48) aufgrund generierter Steuerbefehle aufweist, wobei die über den Sensor (62) erfassten Daten mit den in der Datenbank (78) hinterlegten Daten fortlaufend abgeglichen werden, um entsprechende Steuersignale für den Motors (50), den Sensor (62), die Werkzeugeinheit (52), den Aktor (48) und/oder den Träger (12) zu generieren.

8. Trägersystem nach Anspruch 7, **dadurch gekennzeichnet, dass** der Datenabgleich in der mobilen Vorrichtung (14) der durch den Sensor (62) ermittelten Daten mit der Datenbank (78) in Echtzeit erfolgt, insbesondere mit einer Verifikation und Klassifikation der durch den Sensor (62) ermittelten Daten.

9. Trägersystem nach Anspruch 7 oder 8, **dadurch gekennzeichnet, dass** der Sensor der mobilen Vorrichtung (14) eine visuelle Detektionseinheit (62) mit einer Kamera (64) ist.

10. Trägersystem nach einem der Ansprüche 7 bis 9, **dadurch gekennzeichnet, dass** die mobile Vorrichtung (14) zweigeteilt ausgebildet ist, wobei in einer ersten Einheit (14a) der Sensor (62), die Werkzeugeinheit (52), der Motor (50) zum Antreiben der Werkzeugeinheit (52) und/oder des Aktors (48), der Aktor (48), der erste Rechner (46) und die erste Kommunikationseinheit (60) der Vorrichtung (14) mit Schnittstelle (70a) vorgesehen sind und in der zweiten Einheit (14b) die Datenbank (78), ein zweiter Rechner (76) und eine zweite Kommunikationseinheit (74) der Vorrichtung (14) mit Schnittstelle (36b, 70b) vorgesehen sind, wobei die erste Einheit (14a) und die zweite Einheit (14b) über die beiden Schnittstelle (70a, 70b) zum Datenaustausch miteinander verbindbar sind.

11. Trägersystem nach Anspruch 10, **dadurch gekennzeichnet, dass** die erste Einheit (14a) ein erstes Gehäuse (40) und die zweite Einheit (14b) ein zweites Gehäuse (42) umfasst.

12. Trägersystem nach Anspruch 11, **dadurch gekennzeichnet, dass** das erste und das zweite Gehäuse (40, 42) über eine Steckverbindung (44, 80) lösbar miteinander verbunden sind.

13. Trägersystem nach einem der Ansprüche 7 bis 12, **dadurch gekennzeichnet, dass** die Werkzeugeinheit (52) der mobilen Vorrichtung (14) mindestens eine Vorschubeinheit (54) und eine Rotationseinheit (56) aufweist, welche mit dem Motor (50) zusammenwirken.

14. Trägersystem nach Anspruch 13, **dadurch gekennzeichnet, dass** die Rotationseinheit (56) an einem distalen Ende zumindest das Werkzeug (58) aufweist, insbesondere eine Fräse oder eine Messereinheit.

15. Trägersystem nach einem der Ansprüche 10 bis 14, **dadurch gekennzeichnet, dass** der Spannungsanschluss (26b) an der ersten Einheit (14a) vorgesehen ist und über diesen die erste Einheit (14a) als auch die zweite Einheit (14b) mit Spannung versorgt ist.

16. Trägersystem nach einem der Ansprüche 10 bis 15, **dadurch gekennzeichnet, dass** die dem Träger (12) zugeordnete Schnittstelle (36b) für den Datenaustausch der mobilen Vorrichtung (14) in der zweiten Einheit (14b) angeordnet ist.

17. Trägersystem nach einem der vorangehenden Ansprüche, **dadurch gekennzeichnet, dass** mehrere unterschiedliche mobile Vorrichtungen (14) vorgesehen sind, wobei jeweils nur eine mobile Vorrichtung (14) in der Aufnahme (12a) angeordnet ist.

18. Trägersystem nach Anspruch 17, **dadurch gekennzeichnet, dass** die mobilen Vorrichtungen (14) unterschiedliche Sensoren (62) und/oder Werkzeugeinheiten (52) aufweisen.

19. Verfahren zur Echtzeitregelung der Bearbeitung des Bodens und/oder der Manipulation von Flora und Fauna durch das Trägersystem (10) nach einem der vorangegangenen Ansprüche, mit den folgenden Schritten:

   - Ermitteln der notwendigen Maßnahmen;
   - Durchführen der ermittelten Maßnahmen.

20. Verfahren nach Anspruch 19 mit einem Trägersystem nach Anspruch 17, **dadurch gekennzeichnet, dass** zwischen dem Ermitteln der notwendigen Maßnahmen und dem Durchführen der ermittelten Maßnahmen noch folgende Schritte durchgeführt werden:

   - Aussuchen einer mobilen Vorrichtung (14) aus den zur Verfügung stehenden Vorrichtungen (14);
   - Verbinden der Vorrichtung (14) mit einem Träger (12).

21. Verfahren nach Anspruch 19 bis 20, **dadurch gekennzeichnet, dass** die mobile Vorrichtung (14) nach Durchführen der Maßnahme gegen eine andere mobile Vorrichtung (14) ausgetauscht wird und eine weitere Maßnahme durchgeführt wird.

22. Verfahren nach einem der Ansprüche 19 bis 21, **dadurch gekennzeichnet, dass** das Ermitteln der notwendigen Maßnahmen durch die mobile Vorrichtung (14) wie folgt durchgeführt wird:

   a. zeitlich kontinuierliche Aufnahme datentechnisch definierter Voxel und/oder Pixel und/oder Bilder durch einen Sensor (62) der mobilen Vorrichtung (14);
   b. Übermittlung der Aufnahmedaten an eine Datenbank (78);
   c. Speicherung der Aufnahmedaten in der Datenbank (78);
   d. qualitativer Datenabgleich der Aufnahmedaten mit den in der Datenbank (78) hinterlegten Daten, vorzugsweise mit Durchführung einer Segmentierung, Datenreduktion, und/oder einer Verifikation der Aufnahmedaten durch einen Rechner (46, 76);
   e. Bewertung der abgeglichenen Aufnahmedaten mit bestehenden definierten Datensätzen in der Datenbank (78) durch einen Klassifikator (68) in Verbindung mit dem Rechner (46, 76);
   f. Verarbeitung und Umsetzung der Bewertung durch den Rechner (46, 76) in regelungs- und steuerungstechnische Daten für einen Motor (50), einen Aktor (48), eine Werkzeugeinheit (52) und/oder einen Träger (12).

23. Verfahren nach einem der Ansprüche 19 bis 22, **dadurch gekennzeichnet, dass** das Durchführen der ermittelten Maßnahmen auf Basis der Umsetzung der Bewertung durch den Rechner (46, 76) in regelungs- und/oder steuerungstechnische Daten für den Motor (50), den Aktor (48), die Werkzeugeinheit (52) und/oder den Träger (12) erfolgt und durch Anfahren des Motors (50), des Aktors (48), der Werkzeugeinheit (52) und/oder des Trägers (12) zur Bearbeitung des Bodens und/oder zur Manipulation von Flora und Fauna.

**EP 3 841 444 B1**

24. Verfahren nach Anspruch 22 oder 23, **dadurch gekennzeichnet, dass** die Bewertung in einem mit dem Klassifikator (68) zusammenwirkenden Rechner (46, 76), insbesondere in dem zweiten Rechner (76), und die Verarbeitung und Umsetzung der Bewertung in regelungs- und/oder steuerungstechnische Daten in einem anderen Rechner (46, 76), insbesondere in dem ersten Rechner (46), durchgeführt wird, wofür die Bewertung von dem einen Rechner (46, 76) an den anderen Rechner (46, 76) übermittelt wird.

25. Verfahren nach einem der Ansprüche 22 bis 23, **dadurch gekennzeichnet, dass** die Speicherung, der qualitative Datenabgleich der Aufnahmedaten mit in der Datenbank (78) hinterlegten Daten und/oder die Bewertung durch den Klassifikator (68) durch Künstliche Intelligenz unterstützt werden.

26. Verfahren nach einem der Ansprüche 19 bis 25, **dadurch gekennzeichnet, dass** beim Datenabgleich die Aufnahmedaten an die Segmentierungs- und Datenreduzierungseinrichtung (66) übermittelt werden, welche Zwischenbilder erzeugt.

27. Verfahren nach Anspruch 26, **dadurch gekennzeichnet, dass** nach dem Erzeugen der Zwischenbilder diese an den Klassifikator (68) übermittelt werden, welcher die erzeugten Zwischenbilder anhand bestehender definierter Bilder und Datensätze in der Datenbank (78) im Zusammenwirken mit dem Rechner (46, 76) bewertet.

28. Verfahren nach Anspruch 26 oder 27, **dadurch gekennzeichnet, dass** in der Segmentierungs- und Datenreduzierungseinrichtung (66) zur Erzeugung der Zwischenbilder nacheinander folgende Schritte durchgeführt werden:

a. Jedes übermittelte Bild aus mehreren Pixeln wird in das RGB-(Red, Green, Blue)-Farbmodell überführt;
b. jedes Pixel des übermittelten Bildes basierend auf dem RGB-Farbmodell wird in ein HSV (hue, saturation, value)-Farbmodell transferiert;
c. jedes Pixel basierend auf dem HSV-Farbmodell wird im Hinblick auf die Farbsättigung (saturation) anhand eines Schwellenwertes bewertet, wobei, wenn der Wert der Farbsättigung einen Schwellenwert übersteigt, das Pixel dem binären Wert "1" zugeordnet wird, und, wenn der Wert der Farbsättigung einen Schwellenwert unterschreitet, das Pixel dem binären Wert "0" zugeordnet wird;
d. vorzugsweise parallel mit dem eben genannten Schritt wird jeder Pixel basierend auf dem HSV-Farbmodell im Hinblick auf den Farbwinkel (hue) anhand eines vorbestimmten Bereiches bewertet, wobei, wenn der Farbwinkel in dem vorbestimmten Bereich liegt, das Pixel dem binären Wert "1" zugeordnet wird, und, wenn der Farbwinkel außerhalb des Bereichs liegt, das Pixel dem binären Wert "0" zugeordnet wird;
e. aus den binären Informationen des Farbwinkels und der Farbsättigung entsteht das erste Zwischenbild, welches erheblich weniger Daten als das von der Kamera (64) erzeugte Bild enthält.

29. Verfahren nach einem der Ansprüche 19 bis 28, **dadurch gekennzeichnet, dass** in der Segmentierungs- und Datenreduzierungseinrichtung (66) Pixelfelder aus den Pixeln des Zwischenbildes erzeugt werden.

30. Verfahren nach einem der Ansprüche 19 bis 29, **dadurch gekennzeichnet, dass** die Segmentierungs- und Datenreduktionseinrichtung (66) die Pixel mit Lagekoordinaten versieht.

31. Verfahren nach einem der Ansprüche 19 bis 30, **dadurch gekennzeichnet, dass** der Klassifikator (68) mit Hilfe eines künstlichen neuronalen Netzes die Klassifikation vornimmt.

32. Verfahren nach Anspruch 31, **dadurch gekennzeichnet, dass** das künstliche neuronale Netz durch ein Convolutional Neural Network (CNN) gebildet ist.

**Claims**

1. Carrier system (10) comprising a carrier (12) and a mobile device (14) having at least one sensor (62) and a tool unit (52) for tilling the soil and/or manipulating flora and fauna, wherein said carrier (12) comprises a drive (16) for moving the carrier system (10), a control device (12b), a power source (24) that cooperates with said drive (16) and provides the necessary voltage for operation, a receiving means (12a) for receiving and connecting to said mobile device (14), a communication unit (30), a first communication interface (36a) that cooperates with said communication unit (30) for exchanging data with said mobile device (14) and that has an associated interface (36b), and a second communication interface (32) that cooperates with said communication unit (30) and that receives at least control data and transmits said control data to said control device (12b) for predetermined movement of said carrier (10),

16

wherein said carrier (12) and said mobile device (14) comprise means (12a, 14c, 82a, 82b) for interconnecting them as needed, and said carrier (12) comprises a gripper (82a, 82b) and said mobile device (14) comprises receiving means (14c) associated with the gripper (82a, 82b), via which said device (14) can be gripped and is detachably connected to said carrier, and wherein said carrier (12) is designed as an unmanned aerial vehicle (flying drone), an unmanned land vehicle, an unmanned water vehicle, or an unmanned underwater vehicle.

2. Carrier system according to claim 1, **characterized in that** said second communication interface is an antenna (32) for data exchange with a central, preferably stationary, computer that is separate from said carrier (12).

3. Carrier system according to claim 2, **characterized in that** said second communication interface (32) is also adapted to be used for data exchange with said mobile device (14) and said central computer.

4. Carrier system according to any one of the preceding claims, **characterized in that** said carrier (12) and said mobile device (14) have a voltage connection (26a, 26b) which can be used to supply voltage to said mobile device (14).

5. Carrier system according to any one of the preceding claims, **characterized in that** said carrier (12) and said mobile device (14) have coupling means (28, 72) associated therewith by which said mobile device (14) is releasably connected to said carrier (12).

6. Carrier system according to any one of the preceding claims, **characterized in that** said carrier comprises a GPS unit (34) for detecting the positional coordinates of said carrier (10).

7. Carrier system according to any one of the preceding claims, **characterized in that** said mobile device (14) with said at least one sensor (62) and said tool unit (52) with at least one motor-driven tool (58), includes an actuator (48) for moving at least said tool (58) of said tool unit (52), a motor (50) for driving said tool unit (52) and/or said actuator (48), a database (78), a first communication unit (60, 74) with an interface (70a, 70b; 36a, 36b) and a first computer (46, 76) for controlling said motor (50), said sensor (62), said tool unit (52) and/or said actuator (48) on the basis of generated control commands, with the data acquired via the sensor (62) being continuously compared with the data stored in said database (78) in order to generate corresponding control signals for said motor (50), said sensor (62), said tool unit (52), said actuator (48) and/or said carrier (12).

8. Carrier system according to claim 7, **characterized in that** the data comparison in said mobile device (14) of the data determined by said sensor (62) with the database (78) takes place in real time, in particular with a verification and classification of the data determined by said sensor (62).

9. Carrier system according to claim 7 or 8, **characterized in that** the sensor of said mobile device (14) is a visual detection unit (62) including a camera (64).

10. Carrier system according to any one of claims 7 to 9 above, **characterized in that** said mobile device (14) is designed in two parts, with said sensor (62), said tool unit (52), said motor (50) for driving said tool unit (52) and/or said actuator (48), said actuator (48) said first computer (46) and said first communication unit (60) of said device (14) with interface (70a) being provided in a first part (14a), and with said database (78), a second computer (76) and a second communication unit (74) of said device (14) with interface (36b, 70b) being provided in the second part (14b), wherein said first part (14a) and said second part (14b) can be connected to one another via said two interfaces (70a, 70b) for data exchange.

11. Carrier system of claim 10, **characterized in that** said first part (14a) comprises a first housing (40) and said second part (14b) comprises a second housing (42).

12. Carrier system of claim 11, **characterized in that** said first and second housings (40, 42) are releasably connected to one another by a plug-in connection (44, 80).

13. Carrier system according to any one of claims 7 to 12 above, **characterized in that** said tool unit (52) of said mobile device (14) comprises at least a feed unit (54) and a rotation unit (56) that cooperate with said motor (50).

14. Carrier system according to claim 13, **characterized in that** said rotation unit (56) comprises at least said tool (58) at a distal end thereof, in particular a milling cutter or a blade unit.

**15.** Carrier system according to any one of claims 10 to 14 above, **characterized in that** said voltage connection (26b) is provided on said first part (14a), and that said first part (14a) as well as said second part (14b) are supplied with voltage via said voltage connection.

**16.** Carrier system according to any one of claims 10 to 15 above, **characterized in that** said interface (36b), which is associated with said carrier (12), for data exchange of said mobile device (14b), is arranged in said second part (14b).

**17.** Carrier system according to any one of the preceding claims, **characterized in that** a plurality of different mobile devices (14) are provided, with only one mobile device (14) being arranged in said receiving means (12a) at a time.

**18.** Carrier system according to claim 17, **characterized in that** said mobile devices (14) comprise different sensors (62) and/or tool units (52).

**19.** Method for real-time control of the tilling of the soil and/or the manipulation of flora and fauna by the carrier system (10) according to any one of the preceding claims, comprising the steps of:

- identifying the necessary measures;
- carrying out the measures identified.

**20.** Method according to claim 19 using a carrier system according to claim 17, **characterized in that** between identifying the necessary measures and carrying out the measures identified, the following steps are additionally carried out:

- selecting a mobile device (14) from the devices (14) available;
- connecting the device (14) to a carrier (12).

**21.** Method according to claims 19 to 20, **characterized in that** said mobile device (14) is exchanged for another mobile device (14) after the measure has been carried out, and a further measure is carried out.

**22.** Method according to any one of claims 19 to 21 above, **characterized in that** the necessary measures are identified by said mobile device (14) in the following manner:

a. continuous recording over time of data-defined voxels and/or pixels and/or images by a sensor (62) of said mobile device (14);
b. transmitting the recorded data to a database (78);
c. storing the recorded data in said database (78);
d. qualitatively comparing the recorded data with the data stored in said database (78), preferably at the same time performing a segmentation, data reduction, and/or verification of the recorded data by means of a computer (46, 76);
e. evaluating the compared recorded data with existing defined data records in said database (78) by means of a classifier (68) in conjunction with said computer (46, 76);
f. processing and converting the evaluation by said computer (46, 76) into open-loop and closed-loop control data for a motor (50), an actuator (48), a tool unit (52) and/or a carrier (12).

**23.** Method according to any one of claims 19 to 22 above, **characterized in that** the identified measures are carried out on the basis of the conversion of the evaluation by the computer (46, 76) into open-loop control data and/or closed-loop control data for said motor (50), said actuator (48), said tool unit (52) and/or said carrier (12), and by starting said motor (50), said actuator (48), said tool unit (52) and/or said carrier (12) for tilling the soil and/or for manipulating flora and fauna.

**24.** Method according to claim 22 or 23, **characterized in that** the evaluation is carried out in a computer (46, 76) that cooperates with said classifier (68), in particular in said second computer (76), and that the processing and conversion of the evaluation into closed-loop control data and/or open-loop control data is carried out in another computer (46, 76), in particular in said first computer (46), for which purpose the evaluation is transmitted from the one computer (46, 76) to the other computer (46, 76).

**25.** Method according to any one of claims 22 to 23, **characterized in that** the storage, the qualitative data comparison of the recorded data with data stored in said database (78) and/or the evaluation by said classifier (68) are supported by artificial intelligence.

26. Method according to any one of claims 19 to 25 above, **characterized in that** during data comparison, the recorded data is transmitted to the segmentation and data reduction device (66) which generates intermediate images.

27. Method according to claim 26, **characterized in that** after the intermediate images have been generated, they are transmitted to said classifier (68) which evaluates the generated intermediate images based on existing defined images and data records in said database (78) in cooperation with the computer (46, 76).

28. Method according to claim 26 or 27, **characterized in that** the segmentation and data reduction device (66) for generating the intermediate images performs the successive steps of:

   a. converting each transmitted image from multiple pixels to the RGB (Red, Green, Blue) color model;
   b. transferring each pixel of the transmitted image based on the RGB color model to an HSV (hue, saturation, value) color model;
   c. evaluating each pixel based on the HSV color model in terms of color saturation based on a threshold value, where, if the color saturation value exceeds a threshold value, the pixel is assigned the binary value "1", and if the color saturation value falls below a threshold value, the pixel is assigned the binary value "0";
   d. preferably in parallel with the step mentioned above, evaluating each pixel based on the HSV color model with respect to the color angle (hue) based on a predetermined range, where, if the color angle is within the predetermined range, the pixel is assigned the binary value "1", and if the color angle is outside the range, the pixel is assigned the binary value "0";
   e. creating the first intermediate image from the binary information relating to color angle and color saturation, which intermediate image contains considerably less data than the image generated by the camera (64).

29. Method according to any one of claims 19 to 28 above, **characterized in that** pixel fields are generated from the pixels of the intermediate image in said segmentation and data reduction device (66).

30. Method according to any one of claims 19 to 29 above, **characterized in that** said segmentation and data reduction device (66) adds positional coordinates to the pixels.

31. Method according to any one of claims 19 to 30 above, **characterized in that** said classifier (68) performs the classification using an artificial neural network.

32. Method according to claim 31, **characterized in that** said artificial neural network is constituted by a Convolutional Neural Network (CNN).

**Revendications**

1. Système de support (10) avec un support (12) et un dispositif mobile (14) avec au moins un capteur (62) et une unité d'outil (52) pour le traitement du sol et/ou pour la manipulation de la flore et de la faune, dans lequel le support (12) présente un entraînement (16) pour le mouvement du système de support (10), un appareil de commande (12b), une source d'énergie (24), laquelle coopère avec l'entraînement (16) et fournit la tension nécessaire pour le fonctionnement, un logement (12a) pour la réception et la liaison au dispositif mobile (14), une unité de communication (30), une première interface de communication (36a) coopérant avec l'unité de communication (30) pour l'échange de données avec le dispositif mobile (14), lequel présente une interface (36b) associée, ainsi qu'une deuxième interface de communication (32) coopérant avec l'unité de communication (30), laquelle reçoit au moins des données de commande et les transmet à l'appareil de commande (12b) pour le mouvement prédéfini du support (12), dans lequel le support (12) et le dispositif mobile (14) présentent des moyens (12a, 14c, 82a, 82b) pour les relier l'un à l'autre si besoin est et le support (12) présente une pince (82a, 82b) et le dispositif (14) mobile présente des logements (14c) associés à la pince (82a, 82b), par l'intermédiaire desquels le dispositif (14) peut être saisi et relié de manière libérable au support et dans lequel le support (12) est réalisé sous la forme d'un aéronef sans pilote (drone aérien), véhicule terrestre sans pilote, véhicule aquatique sans pilote, ou véhicule sous-marin sans pilote.

2. Système de support selon la revendication 1, **caractérisé en ce que** la deuxième interface de communication est une antenne (32) pour l'échange de données avec un calculateur central de préférence fixe, séparé du support (12).

3. Système de support selon la revendication 2, **caractérisé en ce que** la deuxième interface de communication (32) est également réalisée pour un échange de données avec le dispositif mobile (14) et le calculateur central.

**4.** Système de support selon l'une quelconque des revendications précédentes, **caractérisé en ce que** le support (12) et le dispositif mobile (14) présentent un raccord de tension (26a, 26b), par l'intermédiaire duquel le dispositif mobile (14) peut être alimenté en tension.

**5.** Système de support selon l'une quelconque des revendications précédentes, **caractérisé en ce que** le support (12) et le dispositif mobile (14) présentent des moyens d'accouplement (28, 72) associés l'un à l'autre, par l'intermédiaire desquels le dispositif mobile (14) est relié de manière libérable au support (12).

**6.** Système de support selon l'une quelconque des revendications précédentes, **caractérisé en ce que** le support présente une unité GPS (34) pour l'acquisition des coordonnées de position du support (12).

**7.** Système de support selon l'une quelconque des revendications précédentes, **caractérisé en ce que** le dispositif mobile (14) avec le au moins un capteur (62) et l'unité d'outil (52) avec au moins un outil (58) entraîné de manière motorisée présente un actionneur (48) pour le déplacement au moins de l'outil (58) de l'unité d'outil (52), un moteur (50) pour l'entraînement de l'unité d'outil (52) et/ou de l'actionneur (48), une base de données (78), une première unité de communication (60, 74) avec interface (70a, 70b ; 36a, 36b) et un premier calculateur (46, 76) pour la commande du moteur (50), du capteur (62), de l'unité d'outil (52) et/ou de l'actionneur (48) sur la base d'instructions de commande générées, dans lequel les données acquises par l'intermédiaire du capteur (62) sont comparées en continu aux données mises en mémoire dans la base de données (78), afin de générer des signaux de commande correspondants pour le moteur (50), le capteur (62), l'unité d'outil (52), l'actionneur (48) et/ou le support (12).

**8.** Système de support selon la revendication 7, **caractérisé en ce que** la comparaison de données dans le dispositif mobile (14) des données déterminées par le capteur (62) à la base de données (78) s'effectue en temps réel, en particulier avec une vérification et classification des données déterminées par le capteur (62).

**9.** Système de support selon la revendication 7 ou 8, **caractérisé en ce que** le capteur du dispositif (14) est une unité de détection visuelle (62) avec une caméra (64).

**10.** Système de support selon l'une quelconque des revendications 7 à 9, **caractérisé en ce que** le dispositif mobile (14) est réalisé en deux parties, dans lequel le capteur (62), l'unité d'outil (52), le moteur (50) pour l'entraînement de l'unité d'outil (52) et/ou de l'actionneur (48), l'actionneur (48), le premier calculateur (46) et la première unité de communication (60) du dispositif (14) avec interface (70a) sont prévus dans une première unité (14a) et la base de données (78), un deuxième calculateur (76) et une deuxième unité de communication (74) du dispositif (14) avec interface (36b, 70b) sont prévus dans la deuxième unité (14b), dans lequel la première unité (14a) et la deuxième unité (14b) peuvent être reliées l'une à l'autre par l'intermédiaire des deux interfaces (70a, 70b) pour l'échange de données.

**11.** Système de support selon la revendication 10, **caractérisé en ce que** la première unité (14a) comprend un premier boîtier (40) et la deuxième unité (14b) un deuxième boîtier (42).

**12.** Système de support selon la revendication 11, **caractérisé en ce que** le premier et le deuxième boîtier (40, 42) sont reliés l'un à l'autre de manière libérable par l'intermédiaire d'une liaison enfichable (44, 80).

**13.** Système de support selon l'une quelconque des revendications 7 à 12, **caractérisé en ce que** l'unité d'outil (52) du dispositif mobile (14) présente au moins une unité d'avancement (54) et une unité de rotation (56), lesquelles coopèrent avec le moteur (50).

**14.** Système de support selon la revendication 13, **caractérisé en ce que** l'unité de rotation (56) présente sur une extrémité distale au moins l'outil (58), en particulier une fraise ou une unité à lame.

**15.** Système de support selon l'une quelconque des revendications 10 à 14, **caractérisé en ce que** le raccord de serrage (26b) est prévu sur la première unité (14a) et la première unité (14a) ainsi que la deuxième unité (14b) est alimentée en serrage par l'intermédiaire de celui-ci.

**16.** Système de support selon l'une quelconque des revendications 10 à 15, **caractérisé en ce que** l'interface (36b) associée au support (12) pour l'échange de données du dispositif mobile (14) est disposée dans la deuxième unité (14b).

**17.** Système de support selon l'une quelconque des revendications précédentes, **caractérisé en ce que** plusieurs dispositifs (14) différents sont prévus, dans lequel respectivement un seul dispositif mobile (14) est disposé dans le logement (12a).

**18.** Système de support selon la revendication 17, **caractérisé en ce que** les dispositifs mobiles (14) présentent des capteurs (62) et/ou unités d'outil (52) différents.

**19.** Procédé pour la régulation en temps réel du traitement du sol et/ou la manipulation de la flore et de la faune par le système de support (10) selon l'une quelconque des revendications précédentes, avec les étapes suivantes :

- la détermination des mesures nécessaires ;
- la mise en oeuvre des mesures déterminées.

**20.** Procédé selon la revendication 19 avec un système de support selon la revendication 17, **caractérisé en ce que** les étapes suivantes sont encore mises en oeuvre entre la détermination des mesures nécessaires et la mise en oeuvre des mesures déterminées :

- la sélection d'un dispositif (14) parmi les dispositifs (14) à disposition ;
- la liaison du dispositif (14) à un support (12).

**21.** Procédé selon la revendication 19 à 20, **caractérisé en ce que** le dispositif mobile (14) après la mise en oeuvre de la mesure est échangé contre un autre dispositif (14) et une autre mesure est mise en oeuvre.

**22.** Procédé selon l'une quelconque des revendications 19 à 21, **caractérisé en ce que** la détermination des mesures nécessaires par le dispositif mobile (14) est mise en oeuvre de la manière suivante :

a. l'enregistrement continu dans le temps de voxels et/ou pixels et/ou d'images définis par technique de données par un capteur (62) du dispositif (14) mobile ;
b. la transmission des données d'enregistrement à une base de données (78) ;
c. la mise en mémoire des données d'enregistrement dans la base de données (78) ;
d. la comparaison de données qualitative des données d'enregistrement aux données mises en mémoire dans la base de données (78), de préférence avec mise en oeuvre d'une segmentation, réduction de données, et/ou d'une vérification des données d'enregistrement par un calculateur (46, 76) ;
e. l'évaluation des données d'enregistrement comparées à des ensembles de données définis existants dans la base de données (78) par un classificateur (68) en liaison avec le calculateur (46, 76) ;
f. le traitement et la conversion de l'évaluation par le calculateur (46, 76) en données de technique de régulation et de commande pour un moteur (50), un actionneur (48), une unité d'outil (52) et/ou un support (12).

**23.** Procédé selon l'une quelconque des revendications 19 à 22, **caractérisé en ce que** la mise en oeuvre des mesures déterminées s'effectue sur la base de la conversion de l'évaluation par le calculateur (46, 76) en données de technique de régulation et/ou de commande pour le moteur (50), l'actionneur (48), l'unité d'outil (52) et/ou le support (12) et par la mise en marche du moteur (50), de l'actionneur (48), de l'unité d'outil (52) et/ou du support (12) pour le traitement du sol et/ou pour la manipulation de la flore et de la faune.

**24.** Procédé selon la revendication 22 ou 23, **caractérisé en ce que** l'évaluation est mise en oeuvre dans un calculateur (46, 76) coopérant avec le classificateur (68), en particulier dans le deuxième calculateur (76), et le traitement et la conversion de l'évaluation en données de technique de régulation et/ou de commande est mis en oeuvre dans un autre calculateur (46, 76), en particulier dans le premier calculateur (46), en échange de quoi l'évaluation est transmise par l'un des calculateurs (46, 76) à l'autre calculateur (46, 76).

**25.** Procédé selon l'une quelconque des revendications 22 à 23, **caractérisé en ce que** la mise en mémoire, la comparaison de données qualitative des données d'enregistrement aux données mises en mémoire dans la base de données (78) et/ou l'évaluation par le classificateur (68) sont assistées par une intelligence artificielle.

**26.** Procédé selon l'une quelconque des revendications 19 à 25, **caractérisé en ce que** lors de la comparaison de données les données d'enregistrement sont transmises au dispositif de segmentation et de réduction de données (66), lequel génère des images intermédiaires.

**27.** Procédé selon la revendication 26, **caractérisé en ce qu'**après la génération des images intermédiaires celles-ci sont transmises au classificateur (68), lequel évalue les images intermédiaires générées sur la base d'images définies existantes et d'ensembles de données dans la base de données (78) en coopération avec le calculateur (46, 76).

**28.** Procédé selon la revendication 26 ou 27, **caractérisé en ce que** les étapes suivantes sont mises en oeuvre les unes après les autres dans le dispositif de segmentation et de réduction de données (66) pour la génération des images intermédiaires :

a. chaque image transmise composée de plusieurs pixels est amenée dans le modèle de couleur RVB (rouge, vert, bleu) ;

b. chaque pixel de l'image transmise sur la base du modèle de couleur RVB est transféré dans un modèle de couleur HSV (teinte, saturation, valeur) ;

c. chaque pixel sur la base du modèle de couleur HSV est évalué en ce qui concerne la saturation de couleur (saturation) à l'aide d'une valeur de seuil, dans lequel, lorsque la valeur de la saturation de couleur dépasse une valeur de seuil, le pixel est associé à la valeur binaire « 1 », et, lorsque la valeur de la saturation de couleur n'atteint pas une valeur de seuil, le pixel est associé à la valeur binaire « 0 » ;

d. de préférence parallèlement à l'étape susmentionnée, chaque pixel est évalué sur la base du modèle de couleur HSV en ce qui concerne la teinte (hue) à l'aide d'une plage prédéfinie, dans lequel, lorsque la teinte se situe dans la plage prédéfinie, le pixel est associé à la valeur binaire « 1 », et, lorsque la teinte se situe à l'extérieur de la plage, le pixel est associé à la valeur binaire « 0 » ;

e. la première image intermédiaire, laquelle contient considérablement moins de données que l'image générée par la caméra (64), est obtenue à partir des informations binaires de la teinte et de la saturation de couleur.

**29.** Procédé selon l'une quelconque des revendications 19 à 28, **caractérisé en ce que** des champs de pixels composés des pixels de l'image intermédiaire sont générés dans le dispositif de segmentation et de réduction de données (66).

**30.** Procédé selon l'une quelconque des revendications 19 à 29, **caractérisé en ce que** le dispositif de segmentation et de réduction de données (66) pourvoit les pixels de coordonnées de position.

**31.** Procédé selon l'une quelconque des revendications 19 à 30, **caractérisé en ce que** le classificateur (68) réalise la classification à l'aide d'un réseau neuronal artificiel.

**32.** Procédé selon la revendication 31, **caractérisé en ce que** le réseau neuronal artificiel est formé par un réseau neuronal convolutif (CNN).

**Fig. 1**

**Fig. 2**

EP 3 841 444 B1

**Fig. 3**

84

86

88

90

92

**Fig. 4**

94

96

98

100

102

104

106

**Fig. 5**

108    110

118

**Fig. 6**

112   112  114    112   112  114

116

Überlagerung    Überlagerung    Zusammenlegung    Überlagerung    Überlagerung    Zusammenlegung

Kompakte
Informations-Ebene

Eingangsbild

Merkmals
Abbildung f1

Merkmals
Abbildung f2'

Merkmals
Abbildung f2

Merkmals
Abbildung f3

Merkmals
Abbildung f4

Merkmals
Abbildung f4'

Merkmals Abbildung f4

110

Vollständige
verbundene
Merkmals-
Ebene

Klassifiziertes
Information
Ausgangsbild

**Fig. 7**

**Fig. 8**

**Fig. 9**

**Fig. 10**

**Fig. 11**

**Fig. 12**

152

154

**Fig. 13**

156          158                    160          158

| 2  | 24 | 41 | 32 | 22 | 9  |
|----|----|----|----|----|----|
| 99 | 23 | 42 | 65 | 7  | 30 |
| 1  | 5  | 0  | 13 | 2  | 42 |
| 15 | 1  | 8  | 0  | 2  | 33 |
| 14 | 20 | 35 | 24 | 32 | 4  |
| 33 | 0  | 5  | 65 | 54 | 32 |

| 2  | 24 | 41 | 32 | 22 | 9  |
|----|----|----|----|----|----|
| 99 | 23 | 42 | 65 | 7  | 30 |
| 1  | 5  | 0  | 13 | 2  | 42 |
| 15 | 1  | 8  | 0  | 2  | 33 |
| 14 | 20 | 35 | 24 | 32 | 4  |
| 33 | 0  | 5  | 65 | 54 | 32 |

| 42 | 65 |
|----|----|
| 35 | 32 |

| 65 | 42 |
|----|----|
| 35 | 33 |

**Fig. 14**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4039797 A1
- DE 102015209879 A1
- DE 102015209891 A1
- DE 102015209888 A1
- DE 102013222776 A1
- DE 102005050302 A1
- DE 102008009753 B3
- DE 202016212623 A1
- WO 2018033925 A1

### In der Beschreibung aufgeführte Nicht-Patentliteratur

- **VERÖFFENTLICHTUNG DJI.** *MG Spreading System User Guide v1.0,* 30. Marz 2018, http://dl.di-icdn.com/downloads/mq 1s/20180330/MG Spreading System User Guide v1.0 Multi. pdf
- **VERÖFFENTLICHTUNG DJI.** *AGRAS MG-1S User Manual,* 17. Oktober 2017, https://dl.di-icdn.com/downloads/mg_1s/20171017/MG-1S_MG-1S RTK User Manual v1.0_EN.pdf
- **KNOLL FLORIAN J et al.** CPU architecture for fast and energy-saving calculation of convolution neural networks. *PROCEEDINGS OF SPIE; [PROCEEDINGS OF SPIE,* 26. Juni 2017, vol. 10524, ISSN 0277-786X, ISBN 978-1-5106-1533-5, 103351M-103351M